(19) **Europäisches Patentamt**

**European Patent Office**

**Office européen des brevets**

(11) **EP 1 566 627 A1**

(12) **EUROPEAN PATENT APPLICATION**

(43) Date of publication:
24.08.2005 Bulletin 2005/34

(51) Int Cl.7: **G01N 21/55**, G01N 21/47

(21) Application number: 05003435.4

(22) Date of filing: **17.02.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventors:<br>• **Knoll, Wolfgang**<br>**55124 Mainz (DE)**<br>• **Yu, Fang**<br>**55128 Mainz (DE)** |
| (30) Priority: **18.02.2004 EP 04003665** | (74) Representative: **Dey, Michael et al**<br>**Weickmann & Weickmann,**<br>**Patentanwälte,**<br>**Postfach 86 08 20**<br>**81635 München (DE)** |
| (71) Applicant: **Max-Planck-Gesellschaft zur Förderung der Wissenschaften e.V.**<br>**80539 München (DE)** | |

(54) **Surface plasmon field-enhanced diffraction sensor**

(57) The present application relates to a surface plasmon field-enhanced diffraction sensor, the production thereof as well as the use thereof for the detection of analytes. The sensor comprises a metal substrate, a biological grating as a period structure arranged on one side of the metal substrate comprising at least two distinct areas with a receptor for binding an analyte, and at least one area separating said at least two distinct areas and not comprising said receptor.

Fig.1

**Description**

The present application relates to a surface plasmon field-enhanced diffraction sensor, the production thereof as well as the use thereof for the detection of analytes.

During the past decade, the concept of optical diffraction on periodic spatial structures has been implemented into the field of sensor development.[1-6] All of those reported strategies were based on conventional diffraction configurations in a transmission or reflection mode. The reflection mode was mostly found in biological sensing applications based on surface diffraction, whereas the transmission mode suggests absorbing materials to boost the diffraction signal,[1] which is not suitable for label-free biosensing. The concept of interface diffraction generally involves a periodic surface pattern fabricated, e.g., by micro-contact printing ($\mu$CP)[7] or photolithography, possessing functional and non-functional areas. The optical contrast modulated by the analyte binding on the functional region induces dynamic change of the diffraction efficiency, which is monitored as an output signal.

As early as 1987, Rothenhäusler and Knoll proposed that the diffraction efficiency can be greatly enhanced by surface-plasmon modes (plasmon surface polaritons, PSP).[8,9] This approach has to be differentiated from the extensively studied approaches in which metallic gratings are used to enhance the momentum of a far-field light for SPR coupling. [10,11] In the approach of Rothenhäusler and Knoll, the light was coupled into surface-plasmon modes through a prism, and a dielectric grating fabricated on the planar metal surface was to diffract the non-radiative PSP field into the light radiation. The grating structure with a periodicity A (much larger than the light wavelength) provides an additional multiple of a small momentum g with $|g|=2\pi/\Lambda$ and delocalizes the surface-plasmon field, giving rise to a typical diffraction phenomenon. With the aid of the SPR enhancement, the diffraction efficiency was reported to be 6 times higher than that in the normal total internal reflection (TIR) configuration, even in the case of a poor SPR coupling (R > 0.35). [8] The gain in diffraction efficiency represents a sensitivity enhancement for sensing applications.

However, there is still a need for improved highly sensitive sensors, in particular, for biological or biochemical analytes.

According to the invention this object is achieved by a surface plasmon field-enhanced diffraction sensor comprising:

a) a metal substrate,
b) a periodic structure arranged on one side of the metal substrate comprising

(i) at least two distinct areas comprising a receptor for an analyte, and

(ii) at least one area separating the at least two areas of (i), which at least one area does not comprise the receptor of (i),

c) means for emitting light via a prism-coupler onto the metal substrate on the opposite side of the periodic structure of b), and
d) means for detecting light reflected from the metal substrate.

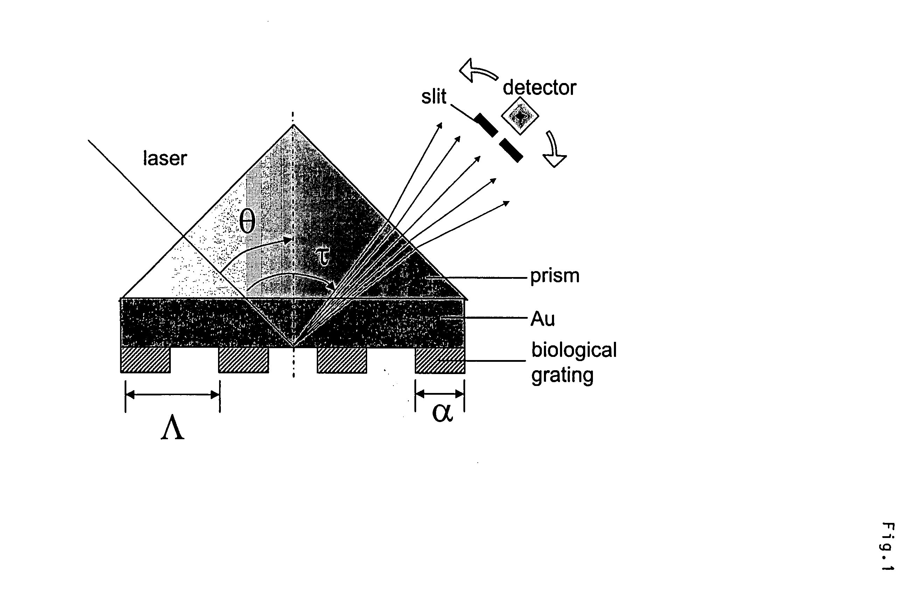

It was found that surface plasmon enhanced evanescent field at a (noble) metal/dielectric interface can be employed to enhance the diffraction efficiency of a surface periodic structure, e.g. a surface grating structure composed of biomolecules. Based on a Kretschmann configuration (cf. Fig.1), a diffraction sensor is provided which allows to monitor the dynamic interaction of biological molecules in a label-free way. According to the invention it is not necessary to provide labels such as fluorescent labels for detecting an analyte. However, mass labels such as latex or Au nanoparticles can be used to further increase the sensitivity.

The invention is demonstrated by the binding of an anti-biotin antibody to a biotin functionalized region of a periodically patterned surface, which generated significant optical contrast to diffract the surface plasmon field and allows for qualitative detection of an analyte. With the aid of the synchronic surface plasmon resonance signal, a quadratic dependence of diffraction signal on the amount of bound analyte, e.g. antibody, was found, which coincides with the theoretical expectation and allows for quantitative detection of an analyte. The finding that the diffraction intensity increases quadratically with the increase of the optical contrast emphasizes the role of the initial contrast in achieving higher sensitivity.

The physical nature of the novel surface plasmon field-enhanced diffraction sensor according to the invention offers label-free and real-time observation of interfacial biomolecular interaction events, with good sensitivity and stability. Theoretical considerations from Fourier diffraction and experimental evidence show that the pattern with an aspect ratio $\rho$ close to 1:1 helps to concentrate the diffracted energy in the first several diffraction orders. Therefore, an aspect ratio, i.e. the ratio of functionalized areas containing a receptor for the analyte to non-functionalized or passivated areas preferably is 0.7:1 to 1:0.7, in particular, 0.8:1 to 1:0.8.

A technical problem, the SPR "detuning" effect, underestimated the diffraction signal to some extent when the analyte binding induced large SPR shift and is preferably taken into consideration while evaluating the results. An investigation on antibody desorption kinetics revealed a nearly identical ratio of biotin/spacer thiolates on the patterned region with that on the un-patterned surface and demonstrated the applicability of this diffraction sensor in kinetic analysis.

The sensor according to the invention is a surface plasmon field-enhanced diffraction sensor. Such sensor comprises a metal substrate, preferably a planar metal substrate. Planar metal substrate, in particular, means that the metal substrate has an even surface and does not have any surface structures of the metal material, e.g. no surface structures in the form of gratings, recesses or patterns of the metal. The metal substrate preferably is made of gold, silver, platinum, palladium, aluminum, nickel, copper, zinc, cadmium and/or mixtures and/or alloys of these metals, in particular, of a noble metal, preferably of gold. Further, the metal substrate preferably has a thickness of at least 10 nm, more preferably at least 20 nm and, in particular, at least 40 nm and preferably up to 1 μm, more preferably up to 200 nm, in particular, up to 100, nm and especially preferably up to 60 nm. Especially preferred is a metal substrate of gold which has a thickness of approximately 40 nm to 60 nm.

The metal is arranged and preferably deposited on one side of a prism, which allows to couple light into surface plasmon modes on the metal substrate. The prism can be made e.g. of glass, preferably of a material having a high refractive index, such as high RI glass.

In the case of the sensor of the invention a periodic structure is arranged on the metal substrate. Said periodic structure, however, is not produced from metal but is rather formed from organic molecules and, in particular, from biomolecules.To this end, the metal substrate comprises at least two distinct areas, so-called functional areas or functional regions, comprising a receptor for an analyte. The receptor thereby is capable of binding to the desired analyte. To form a periodic structure, the functionalized areas are separated by at least one non-functionalized area. Said separating area or separating region does not comprise the receptor of the functionalized area and, in particular, no receptor which is capable of binding to the desired analyte. Even more preferably, said separating area is blocked or passivated so that as few as possible and, preferably, no sample constituents can bind in this area. By the arrangement of the receptors a pattern is formed after contacting the sensor of the invention with a sample containing the desired analyte, said pattern consisting of the analyte bound to the receptor. Said pattern then induces diffraction and, thus, enables measurement according to the invention.

The periodic structure of the invention, as shown above for the simplest case of two functionalized areas and one separating area, can be of any dimension and comprise, for example, at least three, preferably at least five, more preferably at least ten distinct functionalized areas and, for example, at least two, preferably at least four, more preferably at least nine separating areas. It is essential that the areas are arranged recurrently so as to yield a periodic structure. Preferably, a periodic structure consists of parallel lines, wherein functionalized and non-functionalized lines alternate.

The periodic structure preferably has a periodicity which is close to or greater than the wavelength of the irradiated light, for example, from 400 nm, in particular, from 1 μm to 2,000 μm, in particular, to 1,000 μm, more preferably from 50 to 200 μm. Further, the aspect ratio, i.e. the ratio of functionalized areas to non-functionalized areas, preferably is in the range of from 1:100 to 100:1, more preferably from 5:100 to 2:1 and more preferably from 0.7:1 to 1:0.7. It has been found that the diffracted energy can be concentrated in the first diffraction orders by an aspect ratio which approximates 1:1, i.e., in particular, 0.8:1 to 1:0.8, more preferably 0.9:1 to 1:0.9.

The receptor can be attached to the metal substrate according to known processes, e.g. by covalent binding, Van der Waals interactions or electrostatic interactions. The receptor is preferably applied in diluted form, e.g. at a ratio of 1:5 to 1:20 together with diluting molecules which contain the same binding group for attaching to the metal, however, not the receptor group capable of binding with the analyte. Suitably, the receptor is provided depending on the analyte and comprises, for example, antibodies (e.g. for detecting antigens or proteins), antigens (e.g. for detecting antibodies), nucleic acids (e.g. for detecting nucleic acids), members of a high-affinity binding pair (e.g. biotin for binding molecules coupled with streptavidin) or mixtures thereof. Basically, each receptor group is suitable which binds with the desired analyte, with specific receptors being preferred. While binding to the analyte is desired in the functionalized areas, it is preferred that the non-functionalized areas are such that no sample constituents at all, however, at any rate the desired analyte, does not bind thereto. Therefore, these areas preferably are passivated or blocked.

While it is possible according to the invention that the functionalized areas in the periodic structure b) of one sensor contain different receptors for the same analyte, it is preferred that all functionalized areas of one sensor contain the same receptor and, in particular, the same amount of the same receptor, to produce a biological pattern for enhancing diffraction. While in a single periodic structure b) for detecting one analyte preferably the same receptor is used each, it is possible according to the invention to provide sensors, by means of which several different analytes can be detected using several periodic structures b) or which contain different receptors for the same analyte in different periodic structures b). Sensors which have an array structure preferably comprise at least two, more preferably at least five, even more preferably at least ten periodic structures b), whereby according to the invention each of these periodic structures is designed for the detection of a single analyte, and the different periodic structures each comprise different receptors, e.g. different receptors for the same analyte, or preferably different receptors for different analytes.

The sensor of the invention further comprises a light source. By means of said light source light is irradiated onto the metal substrate on the opposite side of the periodic structure of b), i.e. to the reverse side of the metal substrate through a coupling prism for SPR coupling. Particularly preferably the light source is a laser, e.g. an infrared laser such as an HeNe laser. Further, the sensor of the invention comprises means for detecting light, preferably an optical detector such as a photodiode or a photodiode array. The light reflected from the metal substrate, which is reflected on the side of the metal substrate opposite the periodic structure, is measured by means of the detector. By suitable devices, e.g. a slit, the resolution of the detection device can be determined and improved, respectively.

Another subject matter of the invention is a sensor having the analyte bound to the receptor in the periodic structure.

For improving resolution the metal substrate preferably is applied onto a material having high refractive index. Particularly preferably the metal substrate is applied onto a prism, whereby the prism is arranged on the opposite side of the periodic structure of receptors.

Advantageously, the analyte is applied in a liquid sample, e.g. in an aqueous solution. Advantageously, the sensor of the invention is provided with a flow cell which enables continuous supply of analyte solution.

The sensor of the invention is based on a concept of using functional pattern layer on a metal surface to diffract the surface plasmon electromagnetic field supported by the metal surface and thereby achieving bio-sensing with high performance. In particular, the sensor of the invention uses a couple-out phenomenon from the surface plasmons to normal light (free radiation). The arrangement of the invention, in particular, allows self-referencing as well as quadratic signal amplification.

The invention also comprises an array which comprises at least two, more preferably at least five, even more preferably at least ten sensors of the invention. While it is possible to provide complete sensors each, it is also possible to form an array, wherein several sensors, for example, share the means for emitting light and/or means for detecting light.

Since light sources and detectors are often available already in laboratories, the invention further provides the above-described sample holder which comprises the metal substrate applied onto a prism, and the periodic structure of receptors present thereon. Such sample holder then can be integrated into a conventional surface plasmon resonance apparatus.

The invention further comprises a process for producing a surface plasmon field-enhanced diffraction sensor comprising the steps:

   A) providing a metal substrate,
   B) applying a periodic structure of a receptor onto one side of the metal substrate,
   C) providing means for emitting light onto the opposite side of the metal substrate, and

   D) providing means for detecting light reflected from the metal substrate.

A periodic structure on a metal substrate, for example, can be produced by micro-contact printing (μCP). Binding of the receptor onto the metal surface can be effected by conventional binding mechanisms, e.g. by covalent binding, Van der Waals interaction or electrostatic interaction. The separating areas are preferably passivated, e.g. by coating them with a blocking solution. A suitable blocking solution, for example, is a solution of the dilution molecules having the binding group for binding with the metal surface group, however, not a receptor group for binding to the analyte.

The sensor of the invention is suitable both for qualitative and quantitative detection of analytes as well as for kinetic tests. It is not necessary thereby to provide the analyte or other sample constituents with a label or marker, e.g. a fluorescent marker or a dye marker. Binding the analyte to the receptor pattern and measuring the reflected/diffracted light enables direct measurement of the analyte. Particularly good results are obtained, if diffracted light is measured, especially diffracted light of first, second, third, fourth or fifth order, in particular, of first or second order.

Another advantage of the sensor of the invention is that it can be regenerated as often as desired and without substantial efforts and, thus, can be used for new measurements over and over again. By separating the bound analyte, e.g. in a simple manner with rinsing solutions, a regenerated sensor is obtained which then can be used again for further analyses.

In the following, a theoretical description of the surface plasmon enhanced diffraction will be briefly presented. Subsequently, the potential biological application of this novel sensor will be discussed and demonstrated by a model system incorporating an antibody binding to a micro-patterned surface as well as a system including a hybridization assay.

Like the TIR diffraction mode, the ATR-based diffraction mode also allows for the observation of holographic information stored in the region of the interfacial evanescent optical field. The localized PSP wave can be diffracted by gaining (or losing) discrete momenta m. g,which is generated by the periodic surface structure of periodicity Λ. The diffraction angle deviates in discrete increments from the specular-reflection angle (i.e., zeroth-order diffraction) in fulfillment of the corresponding momentum-match condition:

$$k_{diff}^{m} = k_{PSP} \pm mg \qquad (1)$$

where $k_{diff}^{m}$ is the wavevector of the mth diffraction order, $k_{PSP}$ is the wavevector the PSP wave, g is the grating constant with |g|=2π/λ and m is the diffraction order. In general, for a shallow sinusoidal grating composed of non-absorbing materials, the diffraction intensity $I_d$ can be approximated by the following expression:[12]

$$I_d \propto I_0 \left( \frac{\pi \, \Delta nd}{\lambda} \right)^2 \qquad (2)$$

where $I_0$ and $\lambda$ are the intensity and wavelength of the source field respectively, $\Delta nd$ represents the grating amplitude in an optical thickness format. This equation conveys two important messages: 1. The diffraction intensity $I_d$ is proportional to the intensity of the excitation source - the evanescent field, which emphasizes the importance of the surface plasmon field enhancement. 2. $I_d$ is proportional to the square of the grating amplitude $\Delta nd$.

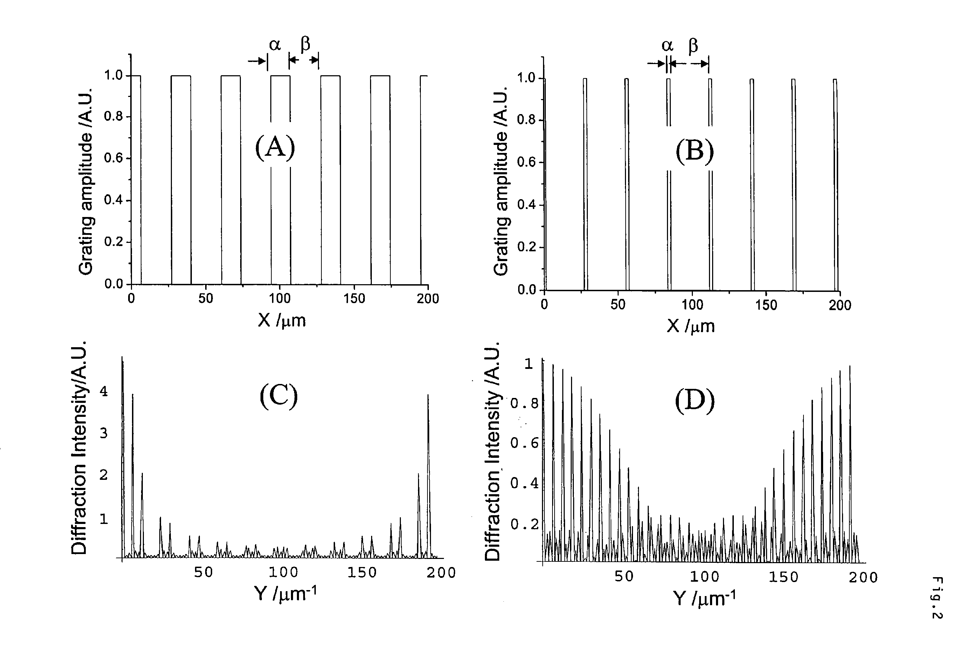

As indicated by Fourier diffraction optics, the diffraction pattern is a Fourier transformation of the source pattern, which can assist a proper grating design. For simplicity, patterns of repeating parallel lines were applied represented by square-wave functions. Figure 2 shows pattern (A) and (B) with the equal amplitudes and periodicities ($\Lambda = \alpha + \beta$) but different aspect ratios $\rho = \alpha/\beta$, and their corresponding Fourier transforms (C) and (D). A symmetric pattern with $\rho$ closer to 1 concentrates the diffracted intensity at the first several diffraction orders (cf. Figure 2(C)), as it resembles a sinusoidal grating and contains less frequency artifacts. For an asymmetric grating, the diffraction orders are evenly distributed (cf. Figure 2(D)), with the intensity being significantly reduced. Therefore, a symmetric grating pattern renders higher diffraction intensity, which generally meets the sensing demand.

The sensor according to the invention, in particular an immuno-sensor is based on the diffraction of surface plasmon, which allows for in-situ, real-time and label-free observation of interfacial binding events. The inherent self-referencing mechanism of surface diffraction is found to be very effective for compensating fluctuations of the bulk, demonstrated by a temperature variation experiment. Possessing stable baseline signal, the diffraction sensor offers high sensitivity, e.g. picomolar sensitivity in directly detecting the binding of human chorionic gonadotropin (hCG) hormone.

Another important advantage of the sensor according to the invention is its self-referencing mechanism.

It is known that accurate referencing is a crucial aspect in many label-free biosensors, such as SPR, waveguide sensor, micro-cantilever sensor, etc. It is essential to compensate bulk effects (e.g. buffer switchings or temperature fluctuations), leading then to a more stable baseline for sensitive detection. However, the fabrication/preparation of the reference channel is either expensive or time-consuming. Surprisingly, these drawbacks of the prior art could be overcome by the sensor according to the invention. The insensitivity of the sensor to perturbations upon, e.g., the exchange of sample solutions provides an extremely stable baseline and was attributed to its self-referencing mechanism.

For the diffraction sensor, functional patterns on the sensor surfaces are created, e.g. by using micro-patterning technique. Preferably, the remaining areas are completely passivated, e.g. by a coating that is resistant to the binding of biomolecules (e.g., a self-assembled monolayer (SAM) of oligoethylene-glycol (OEG) terminated thiols). The binding occurring specifically to the functional zone modulates the optical contrast of the 'dynamic biological grating', inducing a change of the diffraction efficiency. On the other hand, bulk effects simultaneously influence both functional and non-functional areas, and, hence, are largely compensated. Therefore, in theory, the diffraction-based sensor according to the invention is inherently 'self-referencing'.

Preferably, special features in SPR-based diffraction sensor are additionally taken into account. Since the incident angle of the laser is kept constant for surface plasmon excitation, any bulk effect can influence the diffraction intensity by shifting the surface plasmon minimum angle, thus de-tuning the coupling efficiency of the light to the surface plasmon mode. Therefore, practically it is preferred to fix the incident light at an angle so that a certain shift of the SPR spectrum will have a minimum impact on the plasmon field intensity.

The sensor according to the invention further enables the detection of nucleic acid molecules. The detection and analysis of genetic material has drawn unprecedented research efforts during the past decades due to the increasing interest arising from both application and fundamental research concerns. Many methods for the label-free detection of oligonucleotide DNA binding through base pairing have been reported based on optical [20,21], electrochemical [22] and piezoelectric [23], nanomechanical [24] techniques. The basis of operation for a DNA sensor is the coupling between a specific base sequence within a DNA target analyte and the complementary oligonucleotide sequence immobilized on the solid surface of a transducer substrate. This DNA hybridization can be detected as a physical signal and can be monitored in-situ and in real-time.

Due to the small size (mass) of a typical oligonucleotide, its binding to the surface is usually not sufficient to generate a significant optical contrast. Hence, it is experimentally a major challenge for label-free optical sensors to conduct a thorough investigation of this interaction. A few commercial optical biosensors have realized label-free DNA sensing with the aid of 3-D surface matrices used to enhance the DNA surface coverage. [20,25] Only a few reports [21,26] were based on planar functional surfaces, and additional signal amplifications were often required for successful investigations. [27,28]

With the novel biosensor according to the invention, i.e. a surface plasmon diffraction sensor (SPDS), based on surface-plasmon-enhanced diffraction phenomena at periodic spatial structures a highly sensitive and robust sensing technique is provided. The surface grating structure produced by a biological grating, preferably by the analyte itself, can diffract the incident light by superimposing discrete momenta $m \cdot g$ (with $|g|=2\pi/\Lambda$ being the magnitude of grating vector, m being the order of diffraction) generated by the grating constant A (cf. Figure 1). The high optical intensity of the surface-plasmon field greatly enhances the diffraction efficiency of the incident light and allows for a very sensitive probing of surface heterogeneities. The modulation of the grating amplitude upon a biological interaction event induces a quadratically amplified change of the diffraction intensity. The temperature fluctuations and other bulk effects are automatically compensated during the sensing process, due to the inherently 'self-referencing' property of SPDS. Therefore, SPDS is an attractive method for detecting and characterizing oligonucleotide hybridization processes.

In order to have a highly functional surface and to obtain correct kinetic and thermodynamic parameters of oligonucleotide interactions, it is of importance to carefully engineer the functional surface matrices in addition to the instrumental development of the optical DNA sensors. A major aim is to overcome hybridization barriers from, e.g., steric hindrance and/or electrostatic repulsion. One successful example, a planar functional layer fabricated by the attachment of thiolated DNA oligonucleotides to the sensor surface via gold-thiol bond has been shown by SPR [26] and neutron reflectivity [29] studies to be nearly 100% functional. Also applicable is another type of functional matrix based on a well-developed biotin-streptavidin supramolecular architecture that has been used already extensively in DNA hybridization studies by surface plasmon fluorescence spectroscopy (SPFS). [30] The streptavidin monolayer is formed on a mixed self-assembled monolayer (SAM) exposing 5-10% biotin functionalities. The remaining biotin-binding pockets (approx. 1-2) in the surface-attached streptavidin allow for a subsequent attachment of biotinylated DNA probes, with the size of the streptavidin providing a natural limitation of the probe surface density for the next interaction step - the target hybridization. This functional multilayer system has been working quite efficiently for SPFS characterization with extraordinarily high sensitivity and a number of different modes of operation. However, due to the distance-dependent fluorescence yield in SPFS and the lack of label-free information of the oligonucleotide binding, many details of the hybridization process, e.g., the hybridization efficiency remains unknown.

These drawbacks of the prior art are overcome by the present invention. Herein results are presented elucidating the interactions of four different oligonucleotide DNA targets of different length and base sequence with surface-tethered probe DNA oligonucleotides by SPDS. The measured rate constants are used to calculate affinity constants, which are then compared with values obtained from equilibrium titration experiments. Further, we provide an assessment of the detection limit of SPDS, based on the titration experiments. Finally, we address the question of the hybridization efficiency (HE) as a function of the probe DNA coverage.

Figure 1. Schematic drawing of the diffraction sensor based on an ATR mode.

Figure 2. Simulations for the diffraction pattern of two kinds of surface periodic structures, both having the same periodicity and contrast while different line widths. The top graphs, (A) and (B), show the cross-sectional profiles of a more symmetric and an asymmetric surface periodic structure; the bottom graphs, (C) and (D), show the Fourier transforms of (A) and (B), representing their corresponding diffraction patterns and intensities.

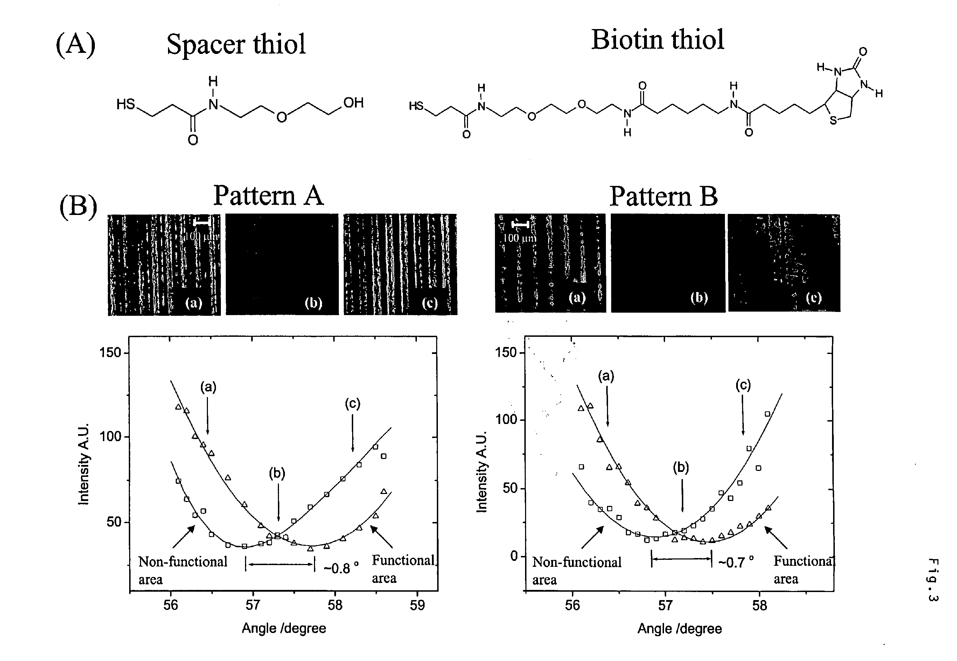

Figure 3. (A) Molecular structures of the biotin- and spacer thiols used in the study. (B) SPM angular analysis for pattern A (left panel) and pattern B (right panel) treated with the anti-biotin antibody. The SPM images shown were taken near the SPR resonance angles (their corresponding angular positions are marked in the plots below, by '(a)', '(b)', '(c)'), with the image contrast of both functional and non-functional areas being reversed at the angle position of (b).

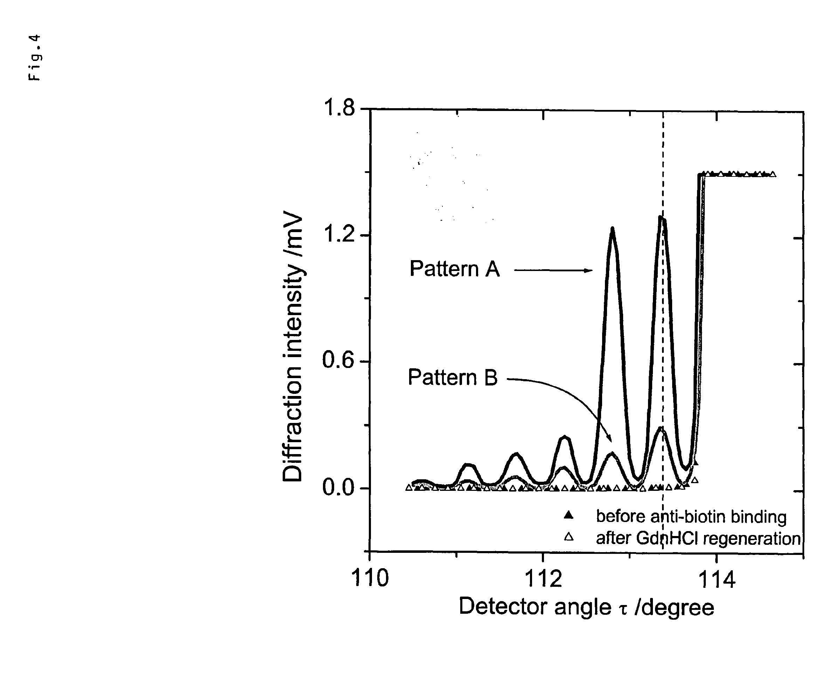

Figure 4. Diffraction angular scans obtained on the patterned surfaces with (full black and grey curves for pattern A and B, respectively) and without (full and open triangles) the binding of the anti-biotin.

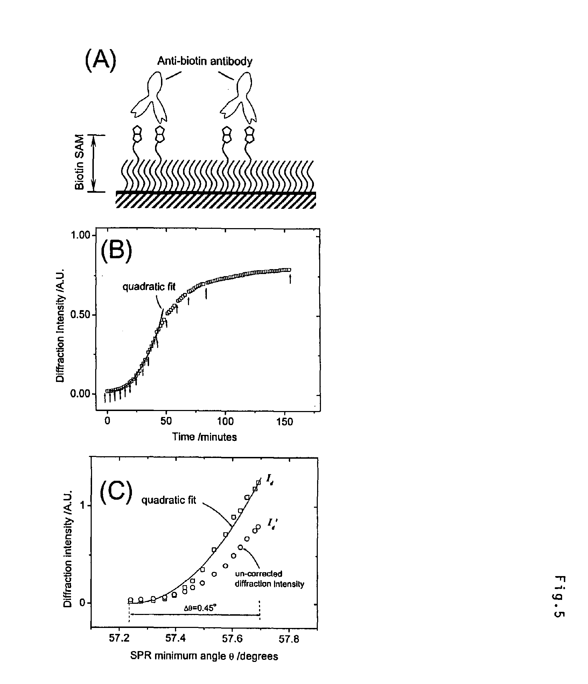

Figure 5. (A) Schematic of the biotin/anti-biotin antibody interaction model applied to reveal the quadratic effect of the diffraction signal. (B) Time-resolved diffraction signal upon the binding of anti-biotin antibodies from a 5 nM solution on the surface of pattern A. At each point indicated by an arrow, an SPR scan was performed and the diffraction signals on both the un-corrected and the corrected incident angles were obtained. The kinetic curve started with a quadratic behaviour and gradually reaches equilibrium due to the saturation of the surface biotin sites. (C) Corrected and un-corrected diffraction intensities versus the corresponding SPR minimum angles. (See text for details)

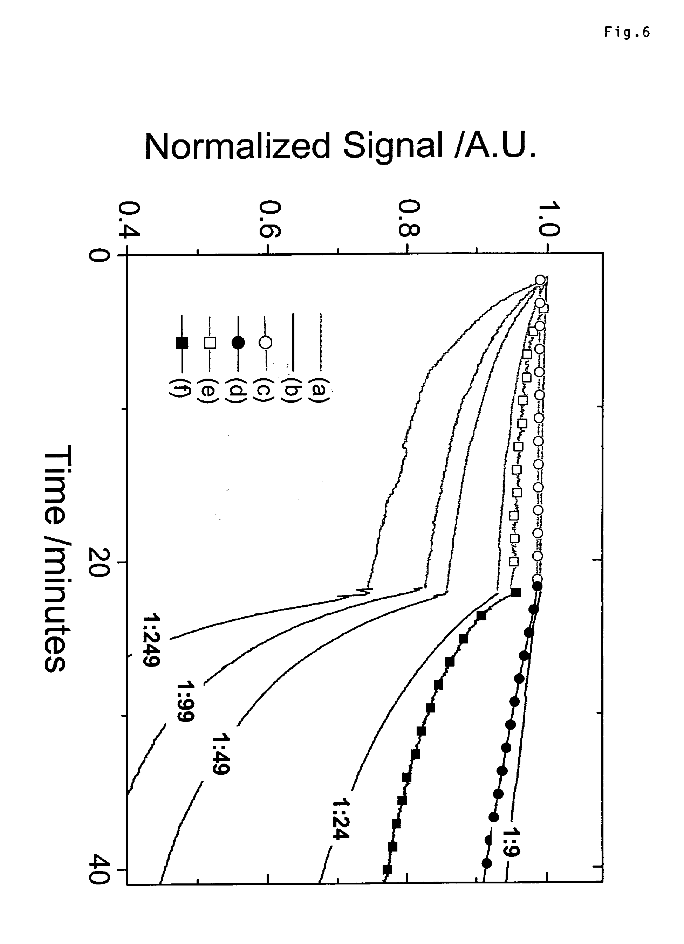

Figure 6. Normalized desorption curves for the surface biotin density determination. SPR kinetic results show the desorption (a) and competitive desorption (b) of bound anti-biotin antibody on 'un-patterned' SAM surfaces prepared by biotin/spacer thiol mixtures with ratios of 1:9, 1:24, 1:49, 1:99, 1:249, respectively. Curve (c), (d), (e), (f) are the diffraction kinetic curves: (c) and (d) are the desorption and competitive desorption obtained on pattern A surface, (e) and (f) are the desorption and competitive desorption obtained pattern B. The diffraction intensities have been corrected by a square root conversion, considering the quadratic effect of the diffraction signal.

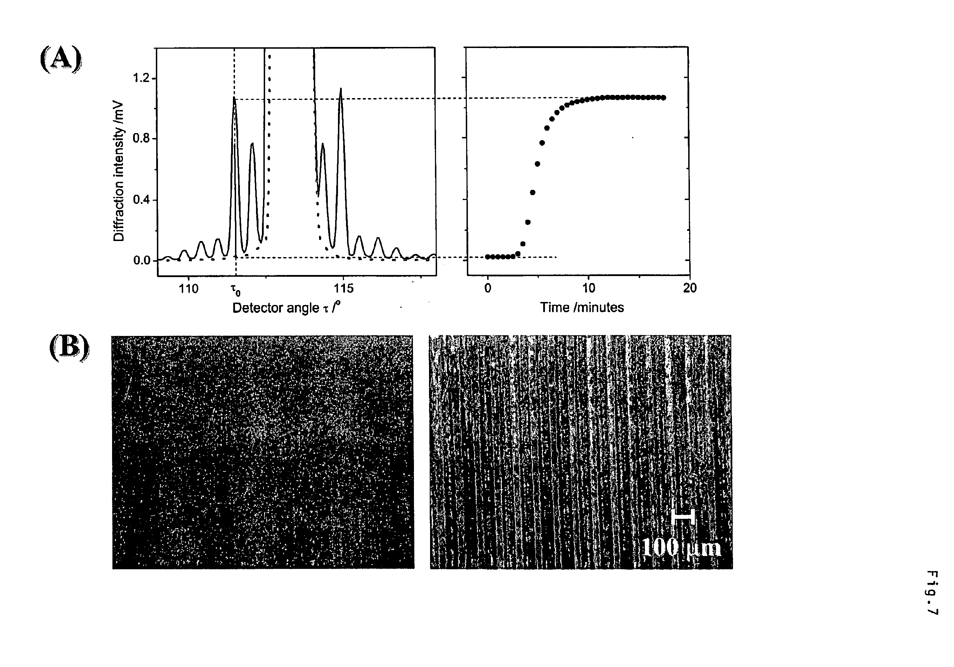

Figure 7: (A) (left curve) Diffraction intensity versus angle $\tau$, as obtained with an angular scan of the detector. Formation of an anti-biotin antibody monolayer at the surface causes a strong increase of the diffraction intensity from $\sim$0 mV to ~1.1 mV at the diffraction order $\tau_0$. (right curve) Diffraction intensity versus time. The addition of the anti-biotin antibody monolayer could be followed in real-time by monitoring the diffracted intensity at a fixed angle $\tau_0$. (B) SPM images of the surface coated with a patterned biotinylated SAM before (left image) and after (right image) the formation of an anti-biotin antibody monolayer.

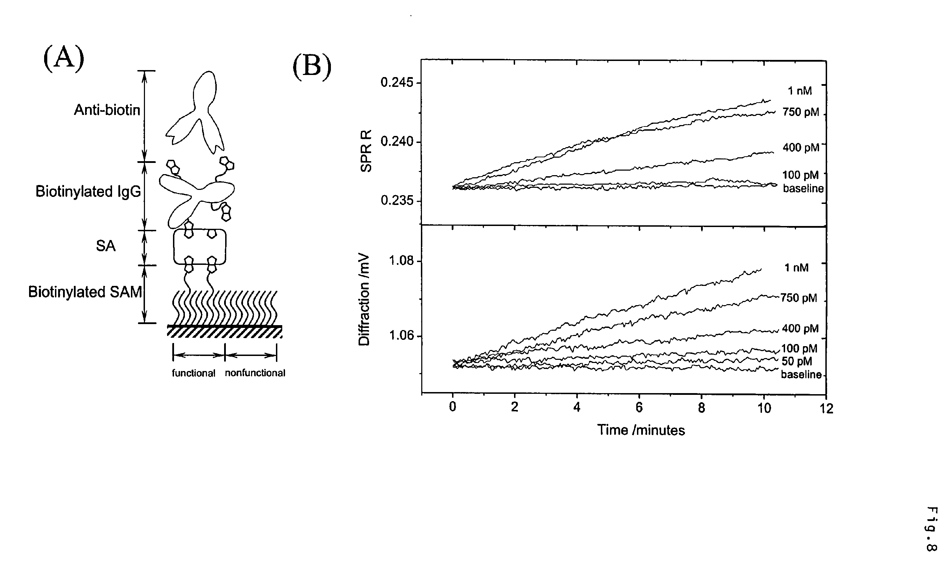

Figure 8: (A) Schematic representation of the architecture employed to directly compare the detection limit of the SPR- and SP-enhanced diffraction-sensing modes based on the same set-up, respectively. (B, top) SPR binding curves of the surface interacting with 2F5 solutions of different concentrations. (B, bottom) Diffraction kinetics curves of the same surface interacting with 2F5 solutions at different concentrations.

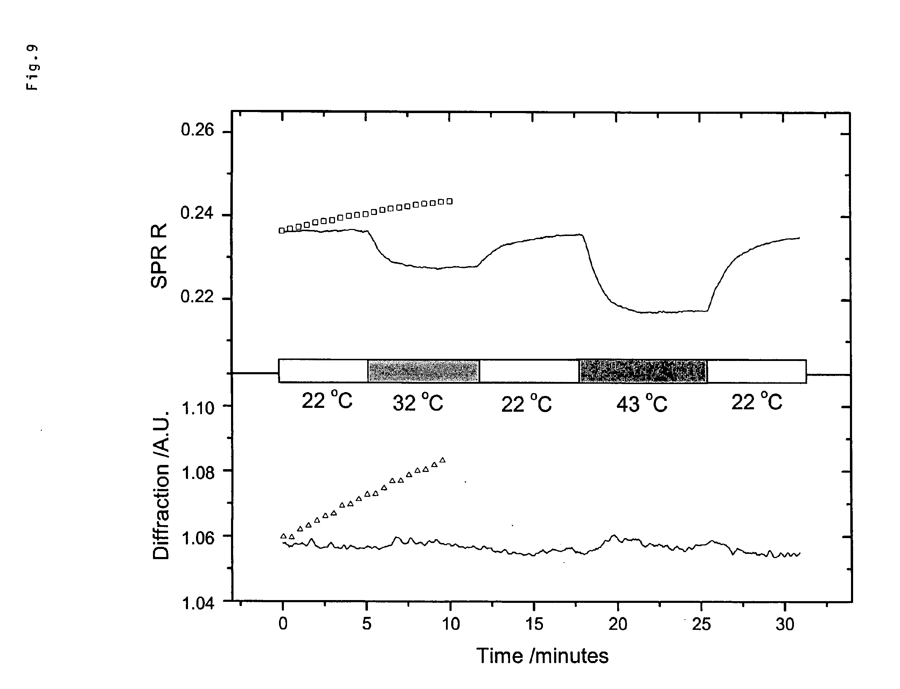

Figure 9: Temperature variation study for both SPR- and diffraction modes, respectively. Solid curves are the temperature response of both signals with only buffer solution in the flow-cell. The signals from a 1 nM 2F5 binding assay are also shown in parallel for SPR (E) and diffraction ($\Delta$), respectively, for comparison.

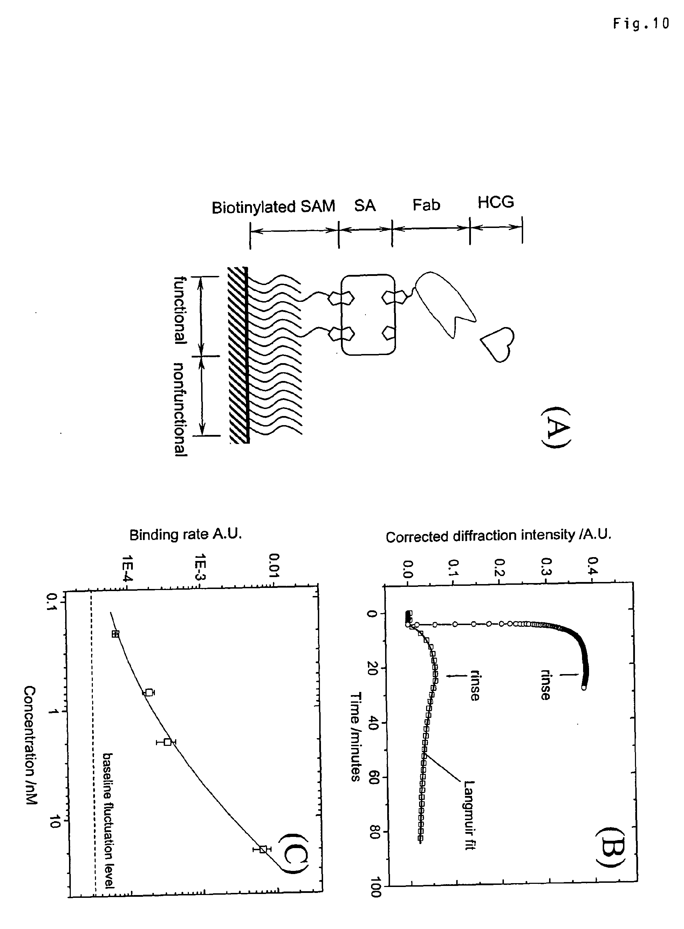

Figure 10: (A) Schematic drawing of the direct detection of hCG by an immobilized anti-hCG Fab fragment by the diffraction sensor. (B) Binding curves of a 500 nM biotinylated anti-hCG Fab solution onto the SA derivatized surface (circle) and of a 20 nM hCG solution onto the Fab surface (square). A Langmuir fit (solid curve) yields the association/dissociation rate constants, as well as, the affinity parameters between hCG and the immobilized Fab. (C) Dose-response curve of the hCG binding assay.

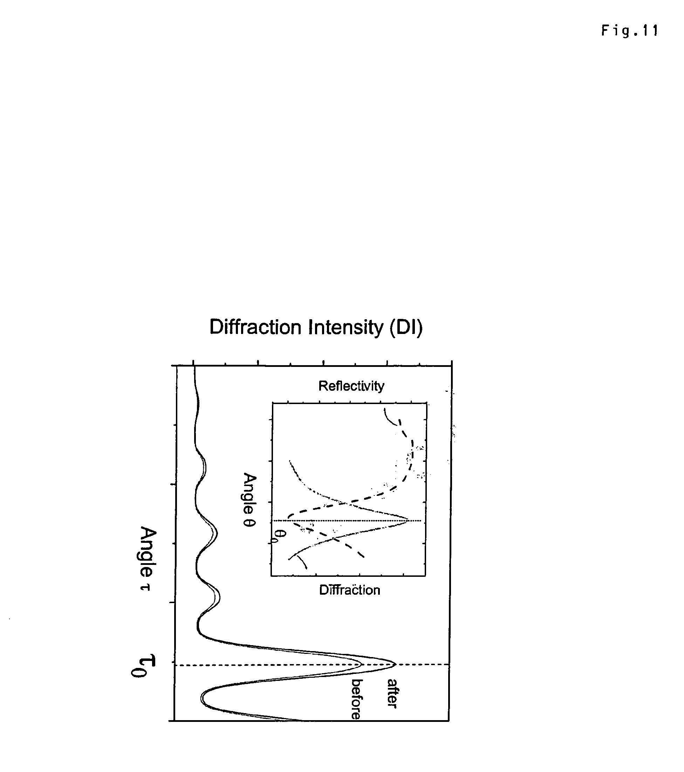

Figure 11: Typical diffraction angular scans before and after, e.g., a hybridization of target DNA. The inset shows schematically the strong dependence of the monitored diffraction intensity on the surface plasmon coupling angle.

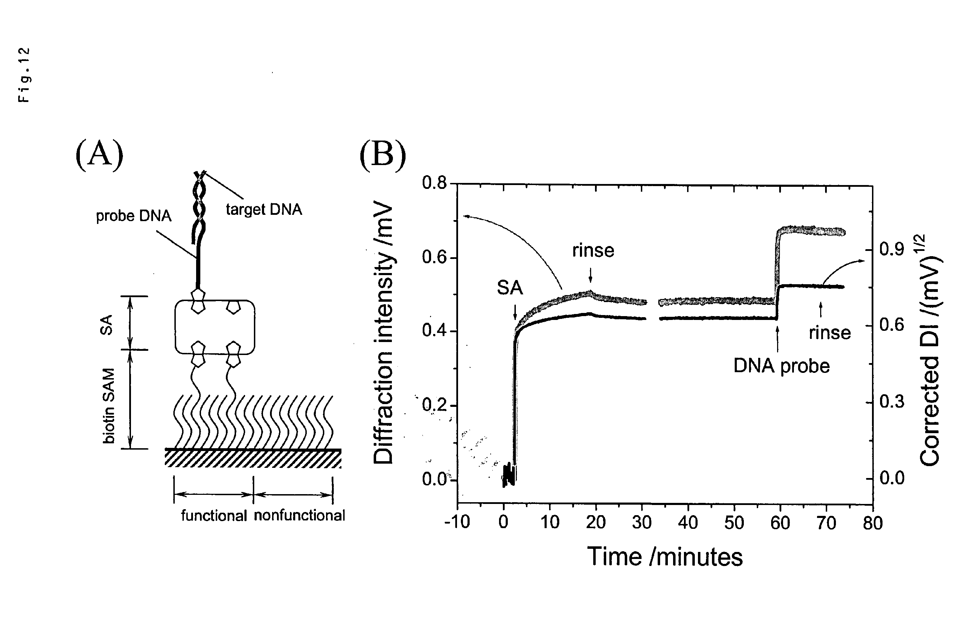

Figure 12: (A) Schematic diagram of the multi-layer architecture built on the functional pattern surface. (B) Experimental (gray curve) and corrected (black) kinetic curves of the SA and DNA probe binding (both from a 1 $\mu$M solution).

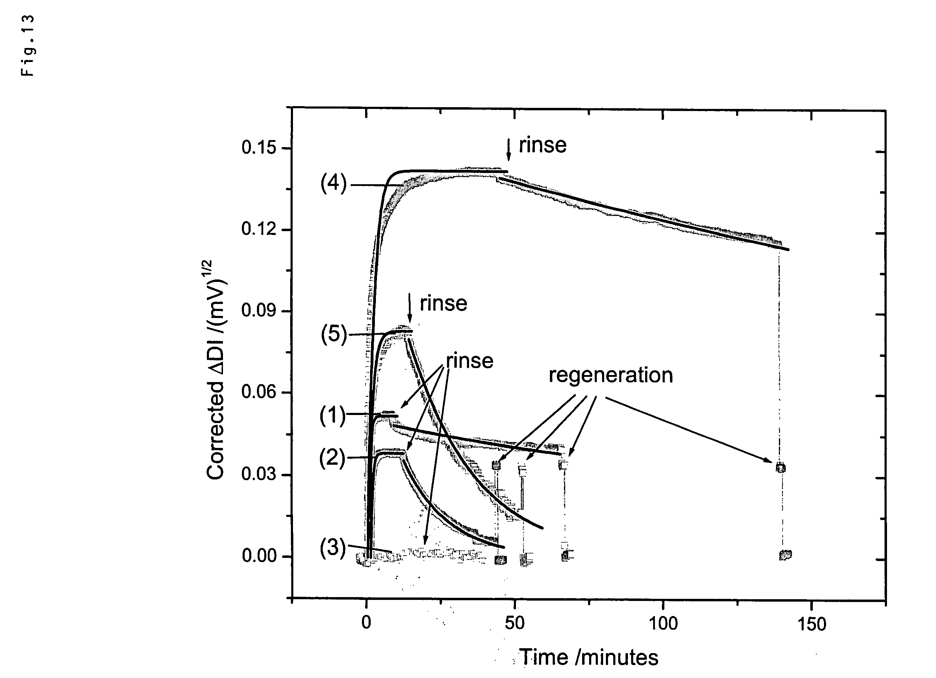

Figure 13: Kinetic curves of hybridization from (1 $\mu$M solutions) of different targets, i.e., T15-0 (curve (1)), T15-1 (curve (2)), T15-2 (curve (3)), T75-0 (curve (4)), T75-1 (curve (5)) to the probe surface. The signals are corrected according to the quadratic dependence of the DI on the optical contrast (cf. text). A 1-minute pulse injection of 10 mM NaOH solution was used to regenerate the probe surface with ~100% recovery. Signal-exponential fits derived from a 1:1 Langmuir model were applied to derive the association/dissociation phases of the binding curves. The obtained corresponding kinetic constants were used for the $K_A$ calculations.

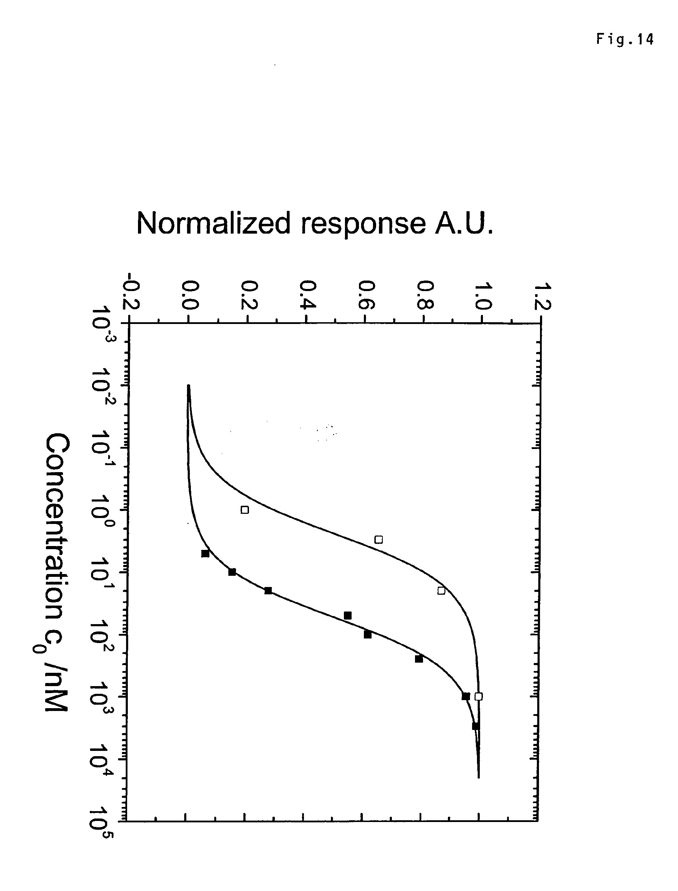

Figure 14: Stepwise titration of the 15-mer target (T15-0 (hollow square), and T15-1 (filled square), respectively) solutions with increasing concentration in the circulation loop connected to the flow-cell. Each concentration was applied until the equilibrium was attained. The equilibrium signals are normalized to the saturation responses (correspond to a target surface concentration of ~$2.4 \times 10^{12}$ molecules/cm$^2$ and $\sim$ $1.8 \times 10^{12}$ molecules/cm$^2$, for T15-0 and T15-1 targets, respectively) of the corresponding target at its maximum concentration. Langmuir fits (solid lines) to the isotherms yield the affinity constants, $K_A$ = $4.17 \times 10^8$ M$^{-1}$ and $K_A$ = $1.92 \times 10^7$ M$^{-1}$ for T15-0 and T15-1, respectively.

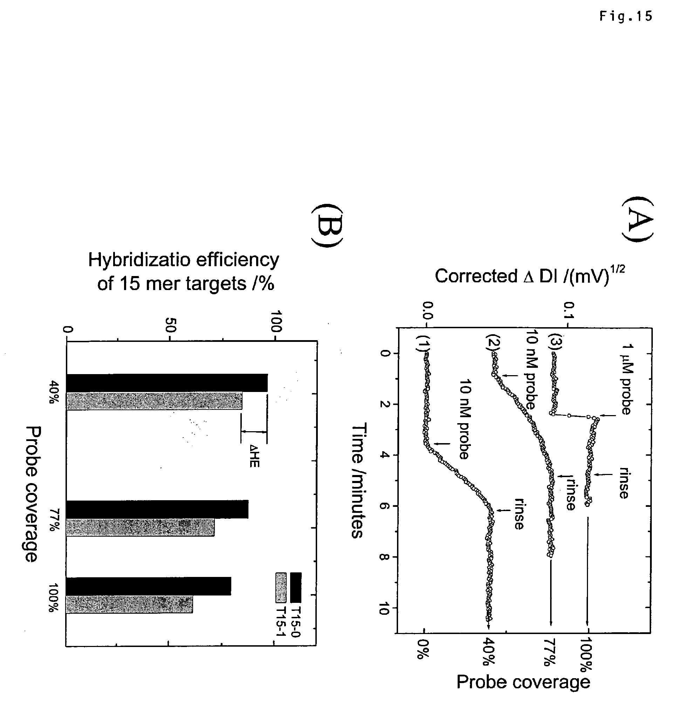

Figure 15: Influence of the probe density on the hybridization efficiency of 15 mer targets: (A) Controlling of the probe coverage by a sequential loading strategy at low working concentration. Three steps were applied, with the injections of 10 nM (curve (1)), 10 nM (curve (2)), and a 1 $\mu$M (curve (3)) probe solution followed by a buffer rinsing; respectively. (B) Hybridization efficiency as a function of probe coverage for T15-0 and T15-1 target, respectively.

## Examples

### 1. Materials

The molecular structures of biotin thiol- and oligo-ethylene-glycol (OEG) thiol- (spacer thiol) derivatives used are given in Figure 3A. Mouse anti-biotin monoclonal antibody 2F5 and biotinylated rabbit anti-goat antibody (abbreviated as biotin-RaG, with 5.2 biotin groups per IgG) was purchased from Molecular Probes. D-biotin and guanidine hydrochloride was purchased from Sigma. HBS-EP buffer (degassed 10 mM HEPES buffer saline, pH 7.4, 150 mM NaCl, 3 mM EDTA, 0.005% (v/v) surfactant P-20, Biacore, Uppsala, Sweden) was used for the preparation of the protein/biotin solutions.

Streptavidin (SA) and biotinylated Fab (antibody fragments) against the C2 epitope of hCG (human chorionic gonadotropin) were used. HCG was purchased from Sigma, and kept at a stock concentration of 0.7 mg/ml in order to maintain its activity and avoid concentration depletion. Bovine serum albumin (BSA) was purchased from Sigma. Glycine/HCl buffer (10 mM, pH 1.7) was obtained from Biacore. The biotinylated DNA probe and DNA targets (T15-0, T15-1, T15-2, T75-0, T75-1) were purchased from MWG-biotech, and are also listed in Table 1. The 75-mer targets (T75-0, T75-1) consist of the same recognition sequences as the 15-mer targets (T15-0, T15-1), however, have two flanks of poly T (30-mer). The T15-0 and T75-0 are fully complementary to the DNA probe, i.e., they define a mismatch zero (MM0) situation, while one base mismatch (MM1) was designed in the sequences of T15-1 and T75-1, respectively. A two-base mismatch (MM2) was designed for the T15-2 target. Streptavidin (SA) was also kindly provided by Roche Diagnostics. HBS-EP buffer (degassed 10 mM HEPES buffer saline, pH 7.4, 150 mM NaCl, 3 mM EDTA, 0.005% (v/v) surfactant P-20, Biacore, Uppsala, Sweden) was used for the preparation of all of the protein/DNA solutions.

## 2. Micro-contact Printing (μCP) for Surface Patterning

Two polydimethyl siloxane (PDMS) stamps with embossed lines were prepared using Sylgard 184 silicon elastomer (Dow Corning). The stamps shared the same periodicity A=100 μm, but with the embossed lines being $\alpha$=42 μm (pattern A) and $\alpha$=6 μm (pattern B) in width, respectively. For the surface patterning, the stamp was inked for 5 minutes in an ethanolic solution of the mixed biotin and spacer thiol (molar ratio 1:9) (cf. Example 1) with a net concentration of 0.5 mM. Excess thiol solution was removed and the stamp was dried in a flow of nitrogen. The stamp was then brought into contact with a freshly evaporated Au (50 nm) substrate for a period of 1-1.5 minutes. The Au film was freshly evaporated onto a high refractive index substrate (LASFN 9, n = 1.85 @ 633 nm). After rinsing with copious amounts of ethanol, the Au substrate was exposed to an ethanolic solution of the pure spacer thiol (2 mM) for 10 minutes in order to passivate the non-derivatized areas. Finally, the patterned substrate was rinsed with ethanol and dried in a flow of nitrogen.

An 'un-patterned' surface herein means a surface completely covered by a mixed self-assembled monolayer (SAM) composed of biotin and spacer thiol with molar ratio of 1:9 unless otherwise mentioned.

## 3. Instrumental

The diffraction experiments was based on a Kretschmann surface plasmon resonance spectroscopy (SPR or SPS) set-up which has been described in detail by Yu et al.[13] A schematic drawing is shown in Fig.1. A linearly p-polarized HeNe laser (λ=633 nm, 5 mW) modulated by a frequency chopper was used for the excitation of the plasmon modes at an incident angle θ. The laser light was reflected off the Au-coated base of the coupling prism (LASFN9, n =1.85 @ 633 nm, triangle, right-angled prism). The reflected/diffracted light at an angle τ was measured by a photodiode detector connected to a lock-in amplifier. For the diffraction scan, the angular acceptance $\Delta\tau$ of the detector was ~0.08°, which was limited by a 1 mm slit. The sample (prism, Au substrate and flow cell) and the detector were mounted to two co-axial goniometers, respectively, enabling an independent tuning of the incident angle θ of the laser and/or the detection angle τ. Both motors rotated in a θ/2θ fashion for the SPR angular scan. For diffraction scan, only the detector motor rotated ($I_d$-versus-τ, cf. Figure 1) while the sample motor kept static at the SPR minimum angle. Surface plasmon microscopy (SPM) measurements were conducted by expanding the laser beam and replacing the photo detector with a lens and a CCD camera. A glass flow cell was coupled to the set-up and a peristaltic pump delivered the sample liquid at a flow rate of 3 mL/min. A peristaltic pump delivered the sample solutions at a flow-rate of 3 mL/min, in order to alleviate the mass-transport effect for a correct assessment of the binding kinetics. The solutions were circulated in a sealed tubing loop after being manually exchanged, a procedure that is especially advantageous if equilibrium titration experiments are conducted.

## 4. Microscopic Characterization on Patterned Surfaces

An antibody monolayer was bound on the functional regions by exposing the patterned surfaces to an anti-biotin solution (20 nM). The SPM images of both pattern A and B surfaces can be seen in Figure 3. By sampling the grayscale value in a series of angular SPM images, the angle-reflectivity curves equivalent to SPR were obtained for both functional and non-functional regions, for determining the SPR minimum angle shift $\Delta\tau$, which is proportional to the grating amplitude $\Delta nd$. For pattern A and B, the Δθ was ~ 0.8 ° and ~ 0.7 ° between functiorial and non-functional areas, respectively. While on an un-patterned surface completely covered by the biotin SAM (ratio=1:9), the binding of anti-biotin gave Δθ = 0.83°±0:03°.[13] It manifested that the antibody coverage on the functional stripes of pattern A was nearly as much as that on the un-patterned surfaces. Whereas, the coverage was slightly lowered on the pattern B.

## 5. Antibody Monolayer Induced Light Diffraction

Prior to the anti-biotin binding, the optical contrasts of the both patterned surfaces were originated from the 10% biotin thiol (slightly larger than the spacer thiol), which were insufficient to render measurable diffractions (cf. full triangles in Figure 4). Subsequently, significant diffractions were observed upon exposing the surfaces to the antibody solution (cf. full curves in Figure 4). For pattern A, the first two observable diffraction orders had more pronounced intensities, in agreement with the simulation for a symmetric pattern (cf. Figure 2(C)). For pattern B, the diffraction intensity was more evenly distributed, also in agreement with the simulation for an asymmetric pattern (cf. Figure 2(D)). Noteworthy is that pattern A provided stronger diffraction peaks than pattern B with the close grating amplitudes ($\Delta\theta = 0.8°$ and $0.7°$). Moreover, the bound antibodies could be completely denatured and removed from the surface by a pulse injection (<5 minutes) of a 4 M aqueous guanidine hydrochloride solution. The removing of the antibody reset the diffraction pattern to the original level (cf. open triangles in Figure 4). Another injection of the anti-biotin antibody resulted in identical diffraction signals, which suggests the surfaces were as $\sim$ 100% functional as pre-regeneration. The patterned surfaces were highly robust to sustain the regeneration condition for many times.

### 6. Quadratic Effect of Diffraction Intensity

The diffraction intensity could be monitored as a function of time, realizing a kinetic observation of biomolecular bindings. Before introducing the antibody, the incident light was set at the SPR minimum $\theta_0$ to generate strong PSP field. The detector arm was tuned to the angle of the first observable diffraction peak (cf. dashed line in Figure 4). Having a larger biotin area, pattern A surface could give significant SPR and diffraction signal upon the antibody binding, and then a relationship between both signals could be established. The working concentration of the anti-biotin solution was 5 nM, in order to realize a mass-transport limited binding. Under such condition, the antibody binding could be paused for quantitative SPR/diffraction angular scans by manipulating, e.g., the flow rate of the sample delivering. The following steps were performed at each point indicated in Figure 5(B) by an arrow:

a. The flow rate was reduced to zero, which largely ceased the antibody binding. Then a diffraction scan was preformed to get $I_d'$.

b. An SPR angular scan was performed to obtain the new SPR minimum angle $\theta$. The laser incident angle was then corrected to be at the new $\theta$, to ensure the equal PSP coupling. Another diffraction angular scan was performed to obtain $I_d$.

c. The laser incident angle was adjusted back to the original angle $\theta_0$ and the kinetics was continued by recovering the sample flow.

For a typical mass-transport limited binding, a linear signal/time relationship is expected at the initial phase under, e.g., SPR recording. [13] However, a quasi-quadratic increase of the diffraction intensity was observed in the kinetic curve (cf. Figure 5(B)). This could be interpreted by the quadratic relationship between the SPR and the diffraction signals as plotted in Figure 5(C). Concerning that the SPR minimum shift is a linear reflection of the grating amplitude $\Delta nd$, the relationship coincided with the theoretical prediction (Equation (2)), as well as the experimental observation by other group [14]. The angular correction (step 'c') was found to be essential for eliminating the strong "detuning" effect of PSP field (cf. 'un-corrected curve' $I_d'$-$\theta$ given in Figure 5(C)) and eventually obtaining proper $I_d$ values. The diffraction signal was considerably underestimated ($I_d'$ versus $I_d$) if the laser incident angle was kept constant, because the SPR. shifted positively up to $\Delta\theta = 0.45°$ causing a corresponding decrease of the PSP coupling efficiency ('detuning'). [13] This needs to be taken into account when the analyte binding induces significant SPR shift.

### 7. Interfacial Kinetic Studies for the Estimation of the Biotin Density

To investigate whether the ratio of the thiolates in the stamped binary SAM is the same as that in the binary SAM prepared in solution, i.e., the 'normal' way. vary with different thiol couples a diffractive study of the interaction kinetics was performed.

Due to the bivalent antibody (two recognition sites per molecule), the desorption kinetics between a bound antibody and its surface-tethered antigen is strongly dependent on the surface density of the antigen, due to a 1:1 to 1:2 binding stoichiometry evolution. [15-17] In return, knowing the antibody desorption kinetics allows one to estimate the antigen density. In order to calibrate the dependence, an SPR study on a series of 'un-patterned' surfaces exposing various biotin densities was conducted. The surfaces were prepared by incubating the Au substrates in mixed thiol solutions with various molar ratios of biotin/spacer thiol from 1:9 to 1:249. The antibody solution (20 nM) was then brought into contact with the surfaces. Upon the binding equilibrium, the antibody was partially desorbed by rinsing with pure buffer, followed by a competitive rinse with a 1 mM biotin solution in order to rule out the influence of the rebinding effect. [15,18]

The normalized SPR desorption curves were plotted in Figure 6, for a clearer comparison of the desorption rates. In agreement with the prior work, [15] all the desorption curves had double exponential behaviors, which made the mathematical treatment too complex to quantify the affinities. Qualitative comparison was given in this sense. For both the normal (cf. curves (a) in Figure 6) and the competitive (cf. curves (b) in Figure 6) desorbing processes, the antibody desorption was faster on SAM surface possessing lower biotin ratio. Assuming the cross-sectional, area of a thiolate is A = 0.26 nm [2] [19] and a homogenous mix of both thiolates, we calculated that the distance between the neighboring biotin thiolates were 1.6 nm, 2.6 nm, 3.6 nm, 5.1 nm, 8.1 nm for 1:9, 1:24, 1:49, 1:99, 1:249 SAM surfaces, respectively. Considering the dimension of a Fab fragment (-6.5*3.5 nm$^2$) of an IgG, these distance values could influence the probability of an antibody to bridge between two biotins. Hence, we infer that the experimental affinity evolution indicates a 1:2 to 1:1 transition of interaction stoichiometry between the antibody and the surface biotin, with the statistical enlargement of the biotin distance.

The aforementioned binding/desorbing/competitive desorbing process was performed on the pattern A and B surfaces, monitored by the diffraction kinetic mode.

### 8. Protein binding and self-referencing

For real-time observations of protein binding, a SPR angular curve was firstly recorded. The incident angle of the laser was then fixed at the SPR minimum angle, in order to couple ~100% light intensity to the Au/dielectric interface and to thus obtain maximum diffraction intensity and to minimize the angular "detuning" effect. The diffraction pattern was then observed and recorded by an angular scan of the detector within an angle range of $\Delta\tau=\pm4°$ near the reflected laser beam (i.e. the 0th diffraction order). For the patterned biotin SAM surface, little diffraction intensity could be observed due to the small optical contrast between the functional and nonfunctional areas of the SAM. The binding of a protein (here, the anti-biotin antibody) to the surface induces strong diffraction peaks, which can be recorded simply by monitoring the intensity changes at the corresponding diffraction. This is given in Figure 7(A): the left panel shows the diffraction patterns before and after the antibody binding (full and dotted curve, respectively), the right curve shows the time dependent increase of the intensity of the monitored diffraction order. Figure 7(B) shows the SPM characterization of the patterned surface: before the binding of the anti-biotin antibody (left picture), the image was nearly featureless corresponding to the weak diffraction intensity. However, after the binding (right picture), a clear surface pattern emerged which was the replica of the pattern of the stamp.

The diffraction intensity ,$I_d$, increases quadratically with the optical contrast , $\Delta nd$:

$$I_d = A*(\Delta nd)^2 \qquad (1)$$

Thus, for a small optical contrast variation,

$$\delta I_d/\delta nd = 2A*\Delta nd \qquad (2)$$

This implies that the diffraction signal modulated by a unit amount of optical contrast variation increases linearly with the level of 'initial' contrast $\Delta nd$. Therefore, in principle, a larger sensitivity can be achieved on the basis of a 'thicker' matrix defining the functional regions. In addition to that, having some initial contrast helps to locate the diffraction orders for real-time intensity recording, since the diffraction by a patterned SAM is very weak (cf. above).

As a first model system for the protein interaction studies, SA and biotin-RaG were used to build up the initial surface contrast as well as the functional sublayer, as shown in Figure 8(A) schematically. The thickness of the SA and biotin-RaG layers were 3.7 nm and 3.6 nm, respectively, calculated from the SPR response, assuming a refractive index of n=1.45 for both proteins. Consequently, significant diffraction peaks emerged, rendering an initial diffraction intensity of ~1.05 mV, for subsequent interaction studies (cf. Figure 8(B), lower panel). Meanwhile, there were still a certain amount of un-reacted biotin groups of biotin-RaG for the next interaction study with anti-biotin antibody 2F5.

Figure 8 (B) shows the corresponding SPR and diffraction responses, respectively, as a function of time recorded after injection of different concentrations of 2F5 (50 pM, 100 pM, 400 pM, 750 pM, 1 nM, respectively) on the same sensor surface. The SPR response was measured by tuning the laser incident to an angle slightly smaller than the SPR minimum angle and monitoring the reflectivity change of the reflected laser beam (i.e., the 0th diffraction order). After each binding assay, the anti-biotin antibodies could be completely removed from the surface by a pulse injection of glycine buffer (10 mM, pH 1.7), without damaging the strong biotin-SA linkages underneath, as indicated by a stable baseline level. At such a low IgG concentration, the mass-transport rate from the bulk to the functional interface dominated the binding kinetics, and the slope of the binding curve (binding rate) represent a direct relationship with the bulk concentration. Using the diffraction signal, 2F5 binding from a 50 pM solution can still be detected. In contrast, it was difficult to detect the signal from a 100 pM solution of 2F5 by SPR, although one should consider that the effective area contributing to the SPR signal was only approximately 43% (43 □m strips on a 100 μm pitch). However, for practical applications, this small advantage of the diffraction mode can be greatly amplified by considering its baseline stability, given by its self-referencing property.

To demonstrate this self-referencing experimentally, a stepwise temperature increase was conducted by a direct comparison between the SPR and the diffraction modes, respectively. On the same sensor surface, two temperatures (32 °C and 43 °C) were subsequently applied and both SPR and diffraction signals were recorded, as shown in Figure 9. The temperature in the flow-cell was maintained by continuously circulating the bulk solution through a temperature-controlled water bath. At a flow-rate of 3 mL/min, it took ~2-3 minutes to bring the in-cell temperature to a new steady state. As a reference, the binding signals of 1 nM solutions of 2F5 are shown in parallel in Figure 9. As can be seen, a significant decrease of the SPR signal when applying higher temperatures was found, known to be a consequence of the refractive index change of the bulk solution. However, little changes could be seen for the diffraction signal when applying the same temperatures, indicating a nearly perfect compensation by its self-referencing mechanism. As a quantitative assessment by referencing to the specific binding signal of 1 nM 2F5, the diffraction signal was at least 50 times less sensitive than the SPR signal to the temperature fluctuations. Such a robustness of the diffraction signal to environmental conditions can be immediately translated into an enhancement of sensitivity. In reality, for un-referenced SPR detection, the noise from switching sample solutions can often exceed the signal, e.g., from a 1 nM 2F5 binding reaction, which is sometimes quite misleading.

### 9. Human chorionic gonadotropin

Next, we tested the direct detection of a clinically relevant molecule, i.e., the hormone human chorionic gonadotropin (hCG), a 37 kDa protein secreted during pregnancy, as another model system to establish the lower detection limit of our novel sensor platform. A sequential binding of SA and a biotinylated anti-hCG Fab layer, as schematically drawn in Figure 10(A), generated the initial optical contrast and the surface functionality. The 'thickness' of the SA and the Fab layers were 3.8 nm and 4.0 nm, respectively, as determined by SPR measurements, assuming a refractive index of n=1.45 for both proteins. This indicates a nearly 1:1 stoichiometry of the SA/Fab interaction.

The binding of the Fab from a 500 nM solution and of hCG from a 20 nM solution (as an example) in HBS buffer are shown in Figure 5(B). Both kinetic traces are corrected concerning the quadratic effect of diffraction signal, by the following equation:

$$I_c = \sqrt{I_{raw} - I_b} \qquad (3)$$

where $I_c$, $I_{raw}$, $I_b$ are the corrected intensity, the raw data and the background intensity (intensity arising from the random surface scattering measured on a bare gold surface), respectively. Thus, $I_c$ is linear to the optical contrast, i.e., the amplitude of the biological surface grating. As can be seen, a quick binding equilibrium was achieved within 5 minutes after the injection of biotinylated Fab, and very little non-specific binding was found upon rinsing with pure buffer, owing to the extremely high affinity of the biotin-SA interaction. The binding of hCG from a 20 nM solution to the Fab-derivatized surface showed a significantly lowered endpoint signal compared to the Fab binding, corresponding to a lower molecular weight and interaction efficiency factor. However, the interaction curve still had a high signal-to-noise ratio, which allows for a detailed analysis of the binding affinity between Fab and hCG. Single-exponential fitting curves based on a simple 1:1 Langmuir interaction model could be applied, and yielded the dissociation constant $K_D$ = 4.9 nM. This value has to be compared to the value obtained by an independent SPR study on an un-patterned surface with the same multilayer system, which gave $K_D$ = 6.2 nM, showing good agreement with the diffraction result. This again showed the applicability of the diffraction sensor for biomolecular interaction studies. When exposing the sensor surface to a 1 mg/mL BSA solution in HBS buffer, no observable signal drift was recorded, indicating a high specificity of the surface.

Applying a 1-minute pulse injection of glycine buffer could regenerate the surface functionality completely. The detection limit of hCG was checked on the same sensor surface, by a sequential injection of hCG solutions with decreasing concentrations. Since the low bulk concentration favored the mass-transport limited binding kinetics, the initial slope of each binding curve (binding rate) was calculated and plotted in Figure 10 (C). As can be seen, the dose-response curve could be extended into the 200 pM hCG concentration range, which is quite remarkable for detecting this small protein molecule. The slope of the baseline fluctuations was still lower than the lowest specific hCG binding signal studied, indicating the potential of further improvement of the detection limit.

### 10. Diffraction scans using a hybridization assay

Typical angular diffraction scans are shown schematically in Figure 1, representing the diffraction patterns before and after the binding of, e.g., a DNA target. The proportional increase in the diffraction intensity (DI) for every diffraction order indicates an optical thickness increase occurring at the surface of the functional regions. The intensity of each diffraction order depends strongly on the laser incident angle $\theta$, which determines the surface plasmon coupling efficiency, as shown in the inset of Figure 1. The maximum diffraction intensity of the monitored diffraction order ($\tau_0$) appears at the SPR minimum angle $\theta_0$. Another reason of having the laser incident angle near $\theta_0$ is the fact that at this minimum angle, the surface plasmon coupling efficiency remains mostly constant even at small shifts of the minimum angle as a consequence of the analyte binding. Therefore, the angular detuning effect is minimized. Thus, in a kinetic diffraction mode, the laser incident angle was tuned to $\theta_0$, the detector rotated to the diffraction order at $\tau_0$, and the DI was monitored as a function of time.

The schematic drawing of the employed multilayer architecture composed of SAM/streptavidin/probe/target is shown in Figure 12(A). The processes were recorded as the sequential increases of the diffraction signal as shown in Figure 12(B). One can see in the raw experimental data (gray curve) that the initial DI induced by the patterned biotin SAM surface was quite weak and almost close to zero. This indicates that the optical difference generated by a difference in the SAM composition was insignificant. However, exposing the patterned surface to a 1 μM SA solution lead to a quick increase of the diffraction signal followed by a second slower increasing phase. The second phase is considered to be associated with a non-specific aggregation of SA molecules because a pure buffer rinse could gradually wash away the signal accumulated in that phase. After a long-time rinse, the baseline remained at approx. 0.48 mV and was extremely stable. The SPR minimum shift upon the SA binding on the patterned surface was measured to be $\Delta\theta_0$ = ~ 0.2 °. Taking into account the fraction (43%) of the functional area relative to the whole surface area, this angle shift on the patterned area is consistent with previous results ($\Delta\theta_0$ = ~0.45°, corresponding to a thickness of d = -3.8 nm assuming n=1.45 for the proteins) [33] obtained on a surface homogenously functionalized by a mixed biotin/spacer thiol solution (1: 9), confirming the formation of an identical SA coverage (~$2.2 \times 10^{12}$ molecules/cm$^2$). The injection of a 1 μM DNA probe solution induced another quick jump of the baseline to a higher level of approx. 0.68 mV. Only a minor signal decrease was observed upon the exchange of the DNA probe solution by pure buffer, indicating a strong and highly specific binding of the probe oligonucleotides via the biotin-SA linkage.

For the further quantitative analysis, the experimental curve was corrected (cf. black curve in Figure 2 (B)), considering the quadratic relationship between the DI $(I_d)$ and the amplitude of the index-of-refraction grating $(\Delta nd)$, represented by the following equation: [34]

$$I_d \propto I_0 \left( \frac{\pi \cdot \Delta nd}{\lambda} \right)^2 \qquad (1)$$

Here, $\Delta nd$ is the amplitude of the biological grating represented by the optical thickness, and $I_o$ and $\lambda$ are the intensity and wavelength of the light source, respectively. One should notice that the background intensity $I_b$ due to the random surface scattering should be subtracted. $I_b$ can be obtained from a measurement on an un-patterned gold surface, and is typically found to be ~0.01 mV. Therefore, $\Delta \sqrt{I_d\text{-}I_b}$ gives the increment of the corrected diffraction signal that is considered to be a response linear to the optical thickness of each layer, which in return is a linear function of the mass concentration of the bound biomolecules. [35] Taking into consideration that proteins and oligonucleotides have similar refractive indices (n) and do not differ considerably with respect to their SPR response, $\Delta \sqrt{I_d\text{-}I_b}$ divided by the corresponding molecular weight (Mw) provides the relative molar surface concentration, and can be used to calculate the stoichiometry between interacting molecules.

The subsequent association/dissociation measurements of the various DNA targets (T15-0, T15-1, T15-2, T75-0, T75-1) performed sequentially on the same sensor chip are presented as corrected signals in Figure 13. The working concentration for each target solution was 1 μM to ensure sufficiently high mass-transport rates for a correct kinetic evaluation. After reaching equilibrium, the target solution was exchanged against the pure buffer in order to dissociate the bound hybrids and to rinse the target strands away. A one-minute-pulse injection of 10 mM NaOH/water solution completely regenerated the probe surface (cf. Figure 13). The same sensor chip could be regenerated at least 30 times and could be used for up to 48 hours without significant loss of its functionality (recovery > 90%).

The in-depth analysis of the results of the hybridizations studies, as well as, of the binding of the SA and probe are listed in Table 2. Firstly, the binding stoichiometry between probe DNA and streptavidin was -1: 0.77. This means that on average 1.3 probe strands were immobilized on each bound SA molecule. Since the surface concentration for the SA monolayer was ~$2.2 \times 10^{12}$ molecules/cm$^2$, i.e., each SA molecule occupies an area of approx. 45 nm$^2$, the surface concentration of the probe is $\sim 2.9 \times 10^{12}$ molecules/cm$^2$, which is close to a so-called 'high' probe density reported by Georgiadis and coworkers.[7] The HE was also calculated for each target. High HEs (84%, 62%) were calculated for T15-0 and T15-1 targets, respectively. However, substantially lowered HEs (46%, 27%) were found for the T75-0 and T75-1 targets, respectively. We infer that the extra two poly-T flanks for the 75-mers play a major role in decreasing the HE, owing to the steric/electrostatic hindrance. Also, the longer extension of the hybridized 75-mers away from the surface may slightly lower their contribution to the optical thickness change sensed by the surface plasmon evanescent field, which decays exponentially into the solution with a depth of $L_z$ ≈150 nm.

The association/dissociation rate constants $(k_{on}, k_{off})$ of the target oligonucleotides were determined by fitting the working curves to a 1:1 Langmuir model, assuming pseudo-first-order association/dissociation kinetics (cf. Figure 13). Within the Langmuir model we then obtained the affinity constant $K_A$ which is simply the ratio of the two rate constants:

$$K_A = \frac{k_{on}}{k_{off}} \qquad (2)$$

At a first glance, the one-base mismatch induced an apparent difference in the binding curves between T15-0 and T15-1, T75-0 and T75-1, especially in the dissociation phases. The obtained $K_A$ values differed by more than an order of magnitude between the 15-mers ($4.98 \times 10^8$ M$^{-1}$, $2.18 \times 10^7$ M$^{-1}$ for T15-0, T15-1 respectively) and the 75-mers ($2.62 \times 10^8$ M$^{-1}$, $1.46 \times 10^7$ M$^{-1}$ for T75-0, T75-1 respectively). A mismatch-two sequence T15-2 was also tested, however, yielded a negligible binding signal. This demonstrated that the obtained hybridization signals were highly specific and the sensor was sensitive to a single-base-pair mismatch. The affinity parameters of T15-0 and T75-0, and of T15-1 and T75-1, respectively, were close, since they contain the same recognition sequences. It is also worth noticing that the pseudo-first-order fitting didn't completely match the association behaviors of the 75-mer targets. This reflects, again, the influence from their bulky poly-T flanks. Firstly, extra time/energy might be needed to change their conformation to form the surface double helix. Secondly, bound 75-mers could influence the surface recognition sites, influencing the subsequent binding events. Therefore, the Langmuir 1:1 model didn't quite apply for the binding of 75-mers, since the interfacial steric/electrostatic cross talk existed. However, the fits still reflect qualitatively the decrease in hybridization affinity by introducing a single-base-pair mismatch.

The affinity constants $K_A$ of the 15-mers were also determined by recording the equilibrium binding to the probe surface at different bulk target concentrations $c_0$. Total span of the target concentration was from 1 nM to 3 μM. The normalized equilibrium response was plotted against the corresponding concentrations co, as shown in Figure 4. A non-linear steady-state fit, based on Langmuir 1:1 model, allows for the determination of $K_A$, according to:

$$\Gamma = \frac{K_A c_0}{1 + K_A c_0} \qquad (3)$$

with $\Gamma$ being the normalized response (surface coverage), and $c_0$ the bulk concentration. The affinity constants for T15-0 and T15-1 were $4.17 \times 10^8$ M$^{-1}$ and $1.92 \times 10^7$ M$^{-1}$, respectively, in good agreement with the affinity constants obtained from the single association/dissociation study. This implies that, the Langmuir model can be applied for the parametrization of the hybridization processes of the 15-mers.

The probe density plays an important role in the target surface hybridization behaviors, i.e., for the binding kinetics and the hybridization efficiency. In order to conduct this study with our matrix, we controlled the probe density in our system by bringing diluted probe concentration (10 nM) into contact with the SA functionalized surface. Under constant flow conditions, the binding of the probe was completely controlled by the mass-transport rate due to the low bulk concentration of probe molecules. Thus, the binding was greatly slowed down and linear in time before nearly saturating the surface sites, which facilitated an easy control of the probe density. Based on the known interaction stoichiometry between SA and probe, the increasing signal could be immediately stopped at any desired probe density level by exchanging the probe solution by pure buffer. As can be seen in Figure 15(A), we thus controlled the probe density at 3 levels of coverage, i.e., 40%, 77% and 100%. In order to ensure the 100% coverage for the third (final) level, a 1 μM biotinylated probes solution was applied. Competitive desorption of a very small amount of SA from the surface that usually could be seen, resulted in a small drop following the abrupt initial jump upon the sample exchange (cf. curve (3) in Figure 15(A)). These levels of coverage were calculated to be equivalent to a probe density of ~$1.2 \times 10^{12}$ molecules/cm$^2$, ~$2.2 \times 10^{12}$ molecules/cm$^2$, ~$2.9 \times 10^{12}$ molecules/cm$^2$, respectively.

The hybridization experiments using 15-mer oligonucleotide targets at a concentration of 2 μM were performed at each level of probe density. The high target concentration was used to ensure the (almost) saturated occupation of the available hybridization sites (cf. Figure 4). The end-point hybridization signals reached at association equilibrium were corrected, considering the quadratic effect of the diffraction sensor. Based on their corresponding molecular weights, the HEs were quantified and plotted in Figure 15(B). One can see that the HE of both targets increased with the probe coverage decreasing. This can be explained by the alleviation of the static and/or electrostatic barrier on diluted probe surfaces. For the 40% probe surface density, i.e., at a probe coverage of ~$1.2 \times 10^{12}$ molecules/cm$^2$, the HE value of T15-0 reached ~96%, indicating that the surface was (nearly) totally functional which can be attributed to the good orientation and moderate density built on the SAM/SA supra-architecture. An interesting observation is that the highest HE of the T15-1 target was only ~85% even at the lowest probe density studied, although operating at a saturation concentration. This implies a reduced availability of sites for MM1 target hybridization by a higher hybridization barrier due to the internally mismatched base. On the other hand, the difference in HE (ΔHE, cf. Figure 15) between the MM0 and MM1 targets could only be slightly alleviated by lowering the probe density.

As an assessment of the limit of detection (LOD) of this DNA sensor, we refer back to the concentration titration experiments (cf. Figure 14). The saturation response of the titration curves for the T15-0 and T15-1 targets corresponds to a coverage of ~ $2.4 \times 10^{12}$ molecules/cm$^2$ and ~ $1.8 \times 10^{12}$ molecules/cm$^2$, respectively. For T15-1, the 5 nM solution gave an equilibrium signal at 6% of its saturation coverage, which could be easily resolved above the baseline fluctuation. Therefore, SPDS can detect at least $1.1 \times 10^{11}$ molecules/cm$^2$ of the 15-mer oligonucleotide, equivalent to a mass concentration of -800 pg/cm$^2$. This preliminary LOD level is comparable to one of the best performance of label-free SPR sensing using near infra-imaging, where the LOD was reported to be ~$10^{11}$ molecules/cm$^2$.

SPDS has been successfully applied for direct and rapid detection of oligonucleotides based on an efficient SAM/SA/probe architecture. It is also a well-qualified tool to discriminate single base-pair mismatch of oligonucleotides by monitoring their kinetic behaviors in real-time. Affinity constants for the 15-mers using both kinetics measurements and equilibrium titration were obtained. The strong dependence of the HE was also studied by controlling the probe density on the sensor surface. Substantial improvements of the HE were achieved when lowering the probe density, although the absolute amount of hybridized targets decreased. A three-dimensional surface matrix may both favor the amount and the efficiency of the hybridization in practical applications.

High quality interaction assays can be offered by SPDS, attributed to its self-referencing property. For example, the binding curves are free of any artifacts from the sample exchange in Figure 15(A), which generally exists in many optical biosensors and significantly influences the precise quantification of small binding signals. The limit of detection was -800 pg/mm$^2$ from a rather preliminary assessment, which already compares favorably to many (commercially) available label-free methods. [15] However, more importantly, the concept of the diffraction detection offers a novel way to integrate reference channels in the micro-array fabrication, which improves the stability and sensitivity of large-scale label-free screening applications.

**References**

1. Bailey, R. C. ; Hupp, J. T. J. Am. Chem. Soc. 2002, 124, 6767-6774.

2. Nakajima, F. ; Hirakawa, Y. ; Kaneta, T. ; Imasaka, T. Anal. Chem. 1999, 71, 2262-2265.

3. Tsay, Y. G. ; Lin, C. I. ; Lee, J. ; Gustafson, E. K. ; Appelqvist, R. ; Magginetti, P. ; Norton, R. ; Teng, N. ; Charlton, D. Clin. Chem. 1991, 37, 1502-1505.

4. Goh, J. B. ; Loo, R. W. ; McAloney, R. A. ; Goh, M. C. Anal. Bioanal. Chem. 2002, 374, 54-56.

5. John, P. M. ; Davis, R. ; Cady, N. ; Czajka, J. ; Batt, C. A.; Craighead, H. G. Anal. Chem. 1998, 70, 1108-1111.

6. Morhard, F. ; Pipper, J. ; Dahint, R. ; Grunze, M. Sens. Actuators B 2000, 70, 232-242.

7. Xia, Y. ; Whitesides, G. M. ; Angew. Chem., Int. Ed. Engl. 1998, 37, 550-575.

8. Rothenhäusler, B. ; Knoll, W. Opt. Commun. 1987, 63, 301-304.

9. Rothenhäusler, B. ; Knoll, W. Appl. Phys. Lett. 1987, 51, 783-785.

10. Raether, H. Surface Plasmons on Smooth and Rough Surfaces and on Gratings, Springer-Verlag; Berlin, 1988.

11. Homola, J.; Koudela, I.; Yee, S. S. Sens. Actuator B-Chem. 1999, 54, 16-24.

12. Nelson, K. A.; Casalegno, R.; Miller, R. J. D.; Fayer, M. D. J. Chem. Phys. 1982, 77, 1144-1152.

13. Yu, F.; Yao, D.; Knoll, W. Anal. Chem. 2003, 75, 2610 -2617.

14. Hasegawa, M.; Yamamoto, T.; Kanazawa, A.; Shiono, T.; Ikeda, T. Chem. Mater. 1999, 11, 2764-2769.

15. Duschl, C.; Sevin-Landais, A-F.; Vogel, H. Biophys. J. 1998, 70, 1985-1995.

16. Bamdad, C. Biophys. J. 1998, 75, 1989-1996.

17. Müller, K. M.; Arndt, K. M.; Plückthun, A. Anal. Biochem. 1998, 261, 149-158

18. Lagerholm, B. C.; Thompson, N. L. Biophys. J. 1998, 74, 1215-1228.

19. Nelles, G.; Schönherr, H.; Jaschke, M.; Wolf, H.; Schaub, M.; Küther, J.; Tremel, W.; Bamberg, E.; Ringsdorf, H.; Butt, H. -J. Langmuir, 1998, 14, 808-815.

20. Persson, B., Stenhag, K., Nilsson, P., Larsson, A., Uhlen, M. and Nygren, P. (1997) Analysis of oligonucleotide probe affinities using surface plasmon resonance: a means for mutational scanning. Anal. Biochem., 246, 34-44.

21. Sauer, M., Brecht, A., Charisse, K., Maier, M., Gerster, M., Stemmler, I., Gauglitz, G. and Bayer, E. (1999) Interaction of chemically modified antisense oligonucleotides with sense DNA: a label-free interaction study with reflectometric interference spectroscopy. Anal. Chem., 71, 2850-2857.

22. Wang, J. (2002) Electrochemical nucleic acid biosensors. Anal. Chim. Acta., 469, 63-71.

23. Hook, F., Ray, A., Norden, B. and Kasemo, B. (2001) Characterization of PNA and DNA immobilization and subsequent hybridization with DNA using acoustic-shear-wave attenuation measurements. Langmuir, 17, 8305-8312.

24. Fritz, J., Baller, M. K., Lang, H. P.,Rothuizen, H., Vettiger, P., Meyer, E., Guntherodt, H. J., Gerber, C. and Gimzewski, J. K. (2000) Translating biomolecular recognition into nanomechanics. Science, 288, 316-318.

25. Watts, H. J., Yeung, D. and Parkes, H. (1995) Real-Time detection and quantification of DNA hybridization by an optical biosensor. Anal. Chem., 67, 4283-4289.

26. Peterson. A. W., Wolf, L. K. and Georgiadis R. M. (2002) Hybridization of mismatched or partially matched DNA at surfaces. J. Am. Chem. Soc., 124, 14601-14607.

27. Jordan, C. E., Frutos, A. G., Thiel, A. J. and Corn, R. M. (1997) Surface plasmon resonance imaging measurements of DNA hybridization adsorption and streptavidin/DNA multilayer formation at chemically modified gold surfaces. Anal. Chem., 69, 4939-4947.

28. He, L., Musick, M. D., Nicewarner, S. R., Salinas, F. G., Benkovic, S. J., Natan, M. J. and Keating, C. D. (2000) Colloidal Au-enhanced surface plasmon resonance for ultrasensitive detection of DNA hybridization. J. Am. Chem. Soc., 122, 9071-9077.

29. Levicky, R., Herne, T. M., Tarlov, M. J. and Satija, S. K. (1998) Using self-assembly to control the structure of DNA monolayers on Gold: a neutron reflectivity study. J. Am. Chem. Soc., 120, 9787-9792.

30. Neumann, T., Johansson, M-L., Kambhampati, D. and Knoll, W. (2002) Surface-plasmon fluorescence spectroscopy. Adv. Funct. Mater., 12, 575-586.

31. Yu, F., Yao, D. and Knoll, W. (2003) Surface plasmon field-enhanced fluorescence spectroscopy studies of the interaction between an antibody and its surface-coupled antigen. Anal. Chem., 75, 2610 -2617.

32. Schuck, P., Millar, D. B. and Kortt, A. A. (1998) Determination of binding constants by equilibrium titration with circulating sample in a surface plasmon resonance biosensor. Anal. Biochem., 265, 79-91.

33. Liebermann, T., Knoll, W., Sluka, P. and Herrmann, R. (2000) Complement hybridization from solution to surface-attached probe-oligonucleotides observed by surface-plasmon-field-enhanced fluorescence spectroscopy. Colloids Surf. A, 169, 337-350.

34. Nelson, K. A., Casalegno, R., Miller, R. J. D. and Fayer, M. D. (1982) Laser-induced excited-state and ultrasonic wave gratings - amplitude and phase grating contributions to diffraction. J. Chem. Phys., 77, 1144-1152.

35. Stenberg, E., Persson, B., Roos, H. and Urbaniczky, C. (1991) Quantitative-determination of surface concentration of protein with surface-plasmon resonance using radiolabeled proteins. J. Colloid. Interface. Sci., 143, 513-526.

36. Steel. A. B., Herne, T. M. and Tarlov, M. J. (1998) Electrochemical quantitation of DNA immobilized on gold. Anal. Chem., 70, 4670-4677.

37. Peterson, A. W., Heaton, R. J. and Georgiadis R. M. (2001) The effect of surface probe density on DNA hybridization. Nucleic Acids Res., 29, 5163-5168.

**Claims**

1. A surface plasmon field-enhanced diffraction sensor comprising:

    a) a metal substrate,
    b) a periodic structure arranged on one side of the metal substrate comprising

        (i) at least two distinct areas comprising a receptor for an analyte, and
        (ii) at least one area separating the at least two areas of (i), which at least one area does not comprise the receptor of (i),

    c) means to couple light into surface plasmon modes on the metal substrate on the opposite side of the periodic structure of b), and
    d) means for detecting light reflected from the metal substrate.

2. Sensor according to claim 1, wherein the metal substrate is a planar metal substrate.

3. Sensor according to claim 1 or 2, wherein the metal substrate is made of gold, silver, platinum, palladium, aluminum, nickel, copper, zinc, cadmium and/ or mixtures and/or alloys of these metals, in particular, of gold.

4. Sensor according to any of claims 1-3, wherein the metal substrate has a thickness of from 10 nm to 200 nm, in particular, of 20 nm to 100 nm.

5. Sensor according to claim 1, wherein the periodic structure has a periodicity Λ from 500 nm to 2,000

μm.

6. Sensor according to any of the preceding claims, comprising

   (i) at least three, in particular, at least five distinct areas comprising a receptor for an analyte, and
   (ii) at least two, in particular, at least four areas separating the at least two areas of (i).

7. Sensor according to any of the preceding claims, wherein the periodic structure consists of areas in the form of lines.

8. Sensor according to claim 7, wherein the aspect ratio of areas according to (i) to areas according to (ii) is from 5:100 to 2:1, in particular, from 0.7:1 to 1:0.7.

9. Sensor according to any of the preceding claims, wherein the receptor is bound to the metallic substrate by covalent binding, electrostatic interaction or Van der Waals interaction.

10. Sensor according to any of the preceding claims, wherein the receptor is selected from antibodies, antigens, nucleic acids, a member of a high-affinity binding pair, or mixtures thereof.

11. Sensor according to any of the preceding claims, wherein the areas of (ii) are passivated.

12. Sensor according to any of the preceding claims, wherein each area of (i) comprises the same receptor.

13. Sensor according to any of the preceding claims, wherein the means to couple light into surface plasmon modes comprise a laser.

14. Sensor according to any of the preceding claims, wherein the means for detecting light is an optical detector, in particular, a photodiode or a photodiode array.

15. Sensor according to any of the preceding claims, having an analyte bound to the receptor in the periodic structure.

16. Sensor according to any of the preceding claims, wherein the means to couple light into surface plasmon modes further comprise a prism attached to the metal substrate on the opposite side of the periodic structure of receptor.

17. Sensor according to any of the preceding claims, further comprising a flow cell for applying an analyte solution.

18. Sensor according to any of the preceding claims, comprising at least two periodic structures b), wherein each of these periodic structures comprises a different receptor.

19. Array comprising at least two sensors according to any of claims 1-20.

20. Sample holder comprising

   a) a metal substrate,
   b) a periodic structure arranged on one side of the metal substrate comprising.

   (i) at least two distinct areas comprising a receptor for an analyte, and
   (ii) at least one area separating the at least two areas of (i), which at least one area does not comprise the receptor of (i).

21. Sample holder according to claim 23, wherein the metal substrate is attached to a prism.

22. A process for producing a surface plasmon field-enhanced diffraction sensor comprising the steps:

   A) providing a metal substrate,
   B) applying a periodic structure of a receptor onto one side of the metal substrate,
   C) providing means for coupling light into surface plasmon resonance on the metal substrate, and
   D) providing means for detecting light reflected from the metal substrate.

23. Process according to claim 25, wherein the receptor is applied using micro-contact printing (μCP) or photolithography.

24. Process according to any of claims 25-27, wherein the separating areas are passivated.

25. A method for detecting an analyte using surface plasmon-field-enhanced diffraction comprising contacting an analyte solution with the receptor containing periodic structure of a sensor according to any claims 1-20 and measuring the reflected and/or diffracted light.

26. The method of claim 29, wherein the diffracted light, in particular, first to fifth order diffracted light is measured.

Fig.1

Fig. 2

Fig.3

Fig.4

Fig.5

Fig.6

(A)

(B)

EP 1 566 627 A1

Fig. 7

Fig.8

(A)

Anti-biotin

Biotinylated IgG

SA

Biotinylated SAM

functional    nonfunctional

(B)

SPR R

0.245
0.240
0.235

1 nM
750 pM
400 pM
100 pM
baseline

Diffraction /mV

1.08
1.06

1 nM
750 pM
400 pM
100 pM
50 pM
baseline

Time /minutes

0   2   4   6   8   10   12

24

Fig.9

Fig.10

Fig.11

Diffraction Intensity (DI)

Fig.12

EP 1 566 627 A1

(A)

(B)

Fig. 13

Fig.14

Fig. 15

**European Patent Office**

## EUROPEAN SEARCH REPORT

Application Number

EP 05 00 3435

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | YU FANG ET AL: "Oligonucleotide hybridization studied by a surface plasmon diffraction sensor (SPDS)." NUCLEIC ACIDS RESEARCH. 2004, [Online] vol. 32, no. 9, 20 May 2004 (2004-05-20), pages E75.1-E75.7, XP002330600 ISSN: 1362-4962 Retrieved from the Internet: URL:http://nar.oxfordjournals.org/cgi/content/full/32/9/e75> [retrieved on 2005-06-02] * the whole document * ----- | 1-26 | G01N21/55 G01N21/47 |
| P,X | YU F ET AL: "IMMUNOSENSOR WITH SELF-REFERENCING BASED ON SURFACE PLASMON DIFFRACTION" ANALYTICAL CHEMISTRY, AMERICAN CHEMICAL SOCIETY. COLUMBUS, US, vol. 76, no. 7, 1 April 2004 (2004-04-01), pages 1971-1975, XP001196731 ISSN: 0003-2700 * the whole document * ----- | 1-26 | |
| P,X | YU F ET AL: "SURFACE PLASMON ENHANCED DIFFRACTION FOR LABEL-FREE BIOSENSING" ANALYTICAL CHEMISTRY, AMERICAN CHEMICAL SOCIETY. COLUMBUS, US, vol. 76, no. 13, 1 July 2004 (2004-07-01), pages 3530-3535, XP001209786 ISSN: 0003-2700 * the whole document * ----- -/-- | 1-26 | TECHNICAL FIELDS SEARCHED (Int.Cl.7) G01N |

The present search report has been drawn up for all claims

| Place of search | Date of completion of the search | Examiner |
|---|---|---|
| Munich | 10 June 2005 | Duijs, E |

EPO FORM 1503 03.82 (P04C01)

European Patent
Office

**EUROPEAN SEARCH REPORT**

Application Number

EP 05 00 3435

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 931 384 A (LAYTON ET AL) 5 June 1990 (1990-06-05) <br><br> * figures 1-3 * <br> * column 1 - column 2 * <br> * column 4, line 16 - line 68 * <br> * column 5, line 62 - column 6, line 57 * <br> ----- | 1-7, 9-12,14, 15, 18-20, 22,24-26 | |
| X | WO 03/014711 A (MITSUBISHI CHEMICAL CORPORATION; SORIN, TAKAAKI; TAKAYAMA, HIDEHITO; N) 20 February 2003 (2003-02-20) <br><br> Japanese <br> * paragraphs [0001] - [0004], [0147], [0153] - [0167]; figures 1,3,5 * | 1-10, 12-15, 17-20, 22,23, 25,26 | |
| P,X | -& EP 1 424 549 A (MITSUBISHI CHEMICAL CORPORATION) 2 June 2004 (2004-06-02) <br><br> English translation of WO 03/014711 A <br> ----- | 1-10, 12-15, 17-20, 22,23, 25,26 | TECHNICAL FIELDS SEARCHED (Int.Cl.7) |
| D,Y | ROTHENHAUSLER B ET AL: "TOTAL INTERNAL DIFFRACTION OF PLASMON SURFACE POLARITONS" APPLIED PHYSICS LETTERS, AMERICAN INSTITUTE OF PHYSICS. NEW YORK, US, vol. 51, no. 11, 14 September 1987 (1987-09-14), pages 723-785, XP000021814 ISSN: 0003-6951 <br> * the whole document * <br> ----- | 1-26 | |

-/--

The present search report has been drawn up for all claims

| Place of search | Date of completion of the search | Examiner |
|---|---|---|
| Munich | 10 June 2005 | Duijs, E |

EPO FORM 1503 03.82 (P04C01)

| | European Patent Office | EUROPEAN SEARCH REPORT | Application Number |
|---|---|---|---|
| | | | EP 05 00 3435 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | MORHARD F ET AL: "Immobilization of antibodies in micropatterns for cell detection by optical diffraction" SENSORS AND ACTUATORS B, ELSEVIER SEQUOIA S.A., LAUSANNE, CH, vol. 70, no. 1-3, 1 November 2000 (2000-11-01), pages 232-242, XP004224604 ISSN: 0925-4005 * the whole document * ----- | 1-26 | |
| Y | ANGELEY D G: "Optical transduction technique utilizing gratings with a potential application towards biosensing" PROCEEDINGS OF THE SPIE - THE INTERNATIONAL SOCIETY FOR OPTICAL ENGINEERING SPIE-INT. SOC. OPT. ENG USA, vol. 4958, 2003, pages 1-12, XP002330601 ISSN: 0277-786X * the whole document * ----- | 1-26 | |
| A | US 5 442 448 A (KNOLL ET AL) 15 August 1995 (1995-08-15) * the whole document * ----- | 1-26 | TECHNICAL FIELDS SEARCHED (Int.Cl.7) |
| A | US 5 986 762 A (CHALLENER ET AL) 16 November 1999 (1999-11-16) * the whole document * ----- | 1-26 | |

The present search report has been drawn up for all claims

| Place of search | Date of completion of the search | Examiner |
|---|---|---|
| Munich | 10 June 2005 | Duijs, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 00 3435

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2005

| Patent document cited in search report | | Publication date | Patent family member(s) | | Publication date |
|---|---|---|---|---|---|
| US 4931384 | A | 05-06-1990 | AT | 34467 T | 15-06-1988 |
| | | | AU | 570425 B2 | 17-03-1988 |
| | | | AU | 2410684 A | 17-07-1984 |
| | | | CA | 1237645 A1 | 07-06-1988 |
| | | | DE | 3376685 D1 | 23-06-1988 |
| | | | EP | 0112721 A2 | 04-07-1984 |
| | | | WO | 8402578 A1 | 05-07-1984 |
| | | | JP | 2502222 B2 | 29-05-1996 |
| | | | JP | 6050972 A | 25-02-1994 |
| | | | JP | 6027742 B | 13-04-1994 |
| | | | JP | 60500309 T | 07-03-1985 |
| | | | NO | 843322 A ,B, | 20-08-1984 |
| | | | US | 5118608 A | 02-06-1992 |
| WO 03014711 | A | 20-02-2003 | EP | 1424549 A1 | 02-06-2004 |
| | | | WO | 03014711 A1 | 20-02-2003 |
| | | | JP | 2003121350 A | 23-04-2003 |
| | | | US | 2004155309 A1 | 12-08-2004 |
| | | | JP | 2003121349 A | 23-04-2003 |
| EP 1424549 | A | 02-06-2004 | EP | 1424549 A1 | 02-06-2004 |
| | | | US | 2004155309 A1 | 12-08-2004 |
| | | | WO | 03014711 A1 | 20-02-2003 |
| | | | JP | 2003121350 A | 23-04-2003 |
| | | | JP | 2003121349 A | 23-04-2003 |
| US 5442448 | A | 15-08-1995 | DE | 4310025 A1 | 29-09-1994 |
| | | | AT | 219243 T | 15-06-2002 |
| | | | DE | 59410136 D1 | 18-07-2002 |
| | | | EP | 0618441 A2 | 05-10-1994 |
| | | | ES | 2176211 T3 | 01-12-2002 |
| | | | JP | 2084421 C | 23-08-1996 |
| | | | JP | 6300530 A | 28-10-1994 |
| | | | JP | 7117381 B | 18-12-1995 |
| US 5986762 | A | 16-11-1999 | DE | 69922956 D1 | 03-02-2005 |
| | | | EP | 1088231 A1 | 04-04-2001 |
| | | | JP | 2002518679 T | 25-06-2002 |
| | | | WO | 9966330 A1 | 23-12-1999 |

EPO FORM P0459

For more details about this annex : see Official Journal of the European Patent Office, No. 12/82